# EUROPEAN PATENT APPLICATION

(11) **EP 4 525 411 A1**
(43) Date of publication of application: **19.03.2025**
(21) Application number: 23815249.0
(22) Date of filing: 31.05.2023
(51) Int. Cl.: H04L 67/141

(54) **COMMUNICATION NODE, DATA TRANSMISSION METHOD, AND STORAGE MEDIUM**

(30) Priority: 31.05.2022 CN 202210613297
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); LU, Ting, Shenzhen, Guangdong 518057 (CN); GAO, Yuan, Shenzhen, Guangdong 518057 (CN)
(74) Representative: Aipex B.V.
(86) International application number: PCT/CN2023/097413
(87) International publication number: WO 2023/232072

(57) **Abstract**

Provided are a communication node, a data transmission method, and a storage medium. A first communication node includes a first communication interface, where the first communication node is connected to a second communication node through the first communication interface; data transmitted between the first communication node and the second communication node through a protocol layer of a first Internet of things is data processed by a target communication node using a target processing method, the target communication node includes the first communication node and a third communication node, the target processing method is a method for processing data by the first communication node and the third communication node, and the protocol layer of the first Internet of things is a protocol layer included in the first communication node in the Internet of things; and the first communication node is a passive communication node.

## Description

### TECHNICAL FIELD

The present application relates to the field of communication technology, for example, a communication node, a data transmission method, and a storage medium.

### BACKGROUND

In recent years, the Internet of things has been widely tested or used in the commercial field such as smart grids, smart parking, intelligent transportation, and smart energy management systems. To achieve the real Internet of everything, a larger number of sensing devices will penetrate various traditional and emerging industries in the future, such as agriculture, industry, environmental protection, urban management, and human health.

However, how to enable a first communication node performing passive communication to access the Internet of things is a current technical problem to be solved urgently.

### SUMMARY

The present application provides a communication node, a data transmission method, and a storage medium.

An embodiment of the present application provides a first communication node including a first communication interface.

The first communication node is connected to a second communication node through the first communication interface.

Data transmitted between the first communication node and the second communication node through a protocol layer of a first Internet of things is data processed by a target communication node using a target processing method, the target communication node includes the first communication node and a third communication node, the target processing method is a method for processing data by the first communication node and the third communication node, and the protocol layer of the first Internet of things is a protocol layer included in the first communication node in the Internet of things.

The first communication node is a passive communication node.

An embodiment of the present application provides a second communication node including a first communication interface and a second communication interface.

The second communication node is connected to the first communication node of any embodiment of the present application through the first communication interface, the second communication node is connected to a third communication node through the second communication interface, and the second communication node forwards data exchanged between the first communication node and the third communication node.

Data transmitted between the second communication node and the first communication node through a first set protocol layer is data processed by a target communication node using a target processing method, the target communication node includes the first communication node and the third communication node, and the target processing method is a method for processing data by the first communication node and the third communication node.

The second communication node communicates with the third communication node through a second set protocol layer.

An embodiment of the present application provides a third communication node including a second communication interface.

The third communication node is connected to the second communication node of any embodiment of the present application through the second communication interface, data transmitted between the third communication node and the second communication node through a protocol layer of a third Internet of things is data processed by a target communication node using a target processing method, the target communication node includes a first communication node and the third communication node, and the target processing method is a method for processing data by the first communication node and the third communication node.

An embodiment of the present application provides a fourth communication node including a third communication interface and a fourth communication interface.

The fourth communication node is connected to the first communication node of any embodiment of the present application through the third communication interface, the fourth communication node is connected to a second communication node through the fourth communication interface, the fourth communication node forwards, through a third set protocol layer, data transmitted between the second communication node and the first communication node, the data transmitted between the second communication node and the first communication node is data processed by a target communication node using a target processing method, the target communication node includes the first communication node and a third communication node, and the target processing method is a method for processing data by the first communication node and the third communication node.

An embodiment of the present application provides a data transmission method applied to the first communication node according to an embodiment of the present application.

The method includes communicating with a second communication node through a protocol layer of a first Internet of things.

An embodiment of the present application provides a data transmission method applied to the second communication node according to an embodiment of the present application.

The method includes communicating with a first communication node through a first set protocol layer and communicating with a third communication node through a second set protocol layer.

An embodiment of the present application provides a data transmission method applied to the third communication node according to an embodiment of the present application.

The method includes communicating with a second communication node through a protocol layer of a third Internet of things.

An embodiment of the present application provides a data transmission method applied to the fourth communication node according to an embodiment of the present application.

The method includes communicating with a first communication node and a second communication node through a third set protocol layer.

An embodiment of the present application provides a computer-readable storage medium. The computer-readable storage medium stores a computer program which, when executed by a processor, causes the processor to perform the preceding data transmission method.

The preceding embodiments and other aspects of the present application and implementations thereof are described in more detail in the brief description of drawings, detailed description, and claims.

### BRIEF DESCRIPTION OF DRAWINGS

FIG. 1 is a structure diagram of a first communication node according to an embodiment.
FIG. 2 is a structure diagram of a data packet according to an embodiment.
FIG. 3 is a flowchart of a data transmission method according to an embodiment.
FIG. 4 is a structure diagram of a second communication node according to an embodiment.
FIG. 5 is a flowchart of another data transmission method according to an embodiment.
FIG. 6 is a structure diagram of a third communication node according to an embodiment.
FIG. 7 is a flowchart of data transmission between a second communication node and a third communication node according to an embodiment.
FIG. 8 is a flowchart of another data transmission method according to an embodiment.
FIG. 9 is a structure diagram of a fourth communication node according to an embodiment.
FIG. 10 is a flowchart of another data transmission method according to an embodiment.
FIG. 11 is a network deployment diagram of the Internet of things according to an embodiment.
FIG. 12 is a schematic diagram of a first communication architecture of the Internet of things according to an embodiment.
FIG. 13 is a schematic diagram of a second communication architecture of the Internet of things according to an embodiment.
FIG. 14 is a schematic diagram of a third communication architecture of the Internet of things according to an embodiment.
FIG. 15 is a schematic diagram of a fourth communication architecture of the Internet of things according to an embodiment.
FIG. 16 is a schematic diagram of a fifth communication architecture of the Internet of things according to an embodiment.
FIG. 17 is a schematic diagram of a sixth communication architecture of the Internet of things according to an embodiment.
FIG. 18 is a schematic diagram of a seventh communication architecture of the Internet of things according to an embodiment.
FIG. 19 is a schematic diagram of an eighth communication architecture of the Internet of things according to an embodiment.
FIG. 20 is a first flowchart of data exchanges between communication nodes in the Internet of things according to an embodiment.
FIG. 21 is a second flowchart of data exchanges between communication nodes in the Internet of things according to an embodiment.
FIG. 22 is a third flowchart of data exchanges between communication nodes in the Internet of things according to an embodiment.

### DETAILED DESCRIPTION

To make the objects, technical solutions, and advantages of the present application more apparent, embodiments of the present application are described hereinafter in detail in conjunction with the drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, the steps illustrated or described may be performed in sequences different from those described herein in some cases.

In recent years, the Internet of things based on narrowband Internet of things (NB-IoT) and Long-Term Evolution (LTE) enhanced Machine-Type Communication (MTO) (eMTC) has been widely tested or used in the commercial field such as smart grids, smart parking, intelligent transportation, and smart energy management systems. The Internet of things is involved in many vertical fields such as smart cities and smart homes and rapidly promotes the upgrade and transformation of traditional industries. A smart parking system can satisfy the deep coverage requirement of an underground scenario and can implement, based on multiple types of sensors, multiple functions such as searching for a parking spot, monitoring a status of a parking lot, and zone information display. A smart grid system can implement functions such as smart metering and autonomous fault reporting. An eMTC-based Internet of things system can achieve vehicle tracking, item tracking, and so on and therefore can be applied to the industries of transportation/logistics and shared bicycles.

The large-scale application of the Internet of things stimulates richer market and technical demands, and new Internet of things applications emerge continuously. It is foreseeable that in the future, a larger number of sensors, Internet of things devices, or modules of other types will penetrate various traditional and emerging industries such as agriculture, industry, environmental protection, urban management, and human health. In one aspect, the Internet of things is applied to the field of libraries. All books in a smart library may be equipped with electronic tags, the flow of books throughout the library is tracked all the time, and book searching and positioning, quantity or state statistics, and the like are likely to be completed in real time. In another aspect, the Internet of things is applied to the field of warehousing and logistics. The warehousing and logistics industry may be highly automated now, and administrators can electronically record, query, and track items by using radio-frequency identification (RFID)-based tag terminals. However, tags need to be read in sequence with a dedicated device, which requires a very huge amount of work. Smarter operations are expected. In still another aspect, the Internet of things is applied to the field of agriculture. Limited by economic levels, traditional agriculture may not be as modernized as expected, and the future agriculture is certain to become more modernized and intelligent. Various sensors may be used for real-time monitoring of crop growth conditions such as soil, water, light, and fertility and conditions such as pests and crop growth, and monitoring data may be used for driving small controllers to adjust growth conditions in real time and handle disasters in time. Additionally, many potential applications are not listed, such as more advanced wearable or medical devices including patches attachable to teeth to monitor oral diseases or dietary health and micro-robots that can enter blood vessels to treat diseases.

Taken together, such applications have proposed requirements with relatively large differences from those of Internet of things applications in the related art. For example, such terminal devices are in very large quantities, and many devices are tiny in size, require extremely simple hardware structures, and even cannot be integrated with batteries. Moreover, even if these devices can be integrated with batteries, a wide diversity of service modes may make it difficult to ensure a long battery life. Since the number of such terminal devices is very huge, charging these terminal devices or replacing their batteries becomes very difficult, requires enormous human and material resources, and even becomes an impossible task. Such Internet of things applications are one of the key parts to the real Internet of everything in the future.

The deployment of the Internet of things on a large scale is limited by the energy consumption and deployment and maintenance costs of sensors. A Wireless Powered Communication Network (WPCN) or a communication technology known as passive Internet of things (IoT) becomes a breakthrough solution for these Internet of things application scenarios.

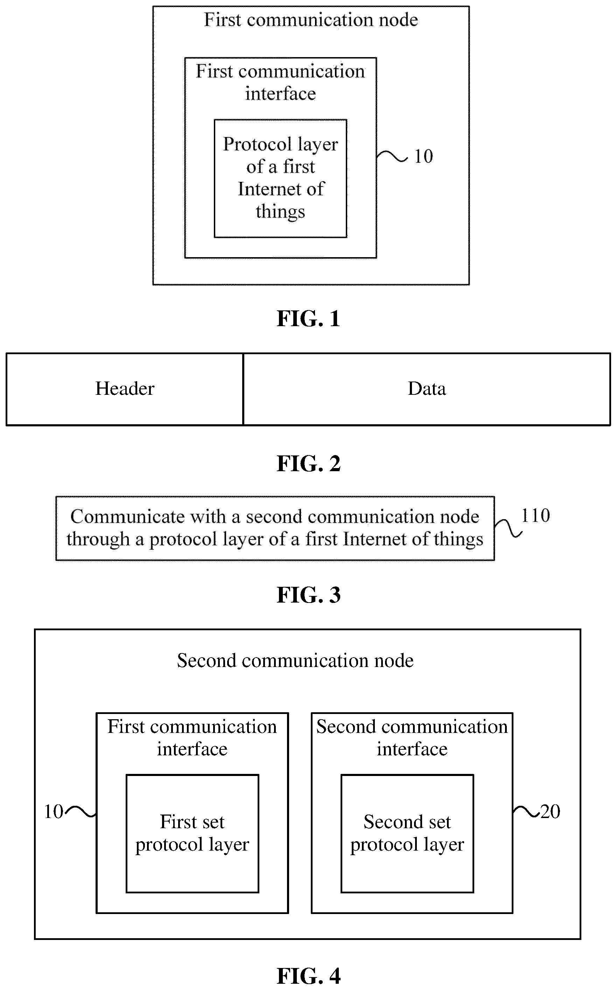

To solve the preceding technical problems, FIG. 1 is a structure diagram of a first communication node according to an embodiment. The first communication node may be a passive communication node such as a passive communication terminal device. As shown in FIG. 1, the first communication node according to this embodiment includes a first communication interface 10.

The first communication node is connected to a second communication node through the first communication interface 10.

Data transmitted between the first communication node and the second communication node through a protocol layer of a first Internet of things is data processed by a target communication node using a target processing method, the target communication node includes the first communication node and a third communication node, the target processing method is a method for processing data by the first communication node and the third communication node, and the protocol layer of the first Internet of things is a protocol layer included in the first communication node in the Internet of things. The first communication node is the passive communication node.

In this embodiment, the first communication node may be understood as the passive communication node. Passive communication may be understood as that the first communication node can communicate with another communication node only after receiving a signal transmitted by the another communication node and cannot actively communicate with another communication node.

In an embodiment, the first communication node may be a passive or semi-passive device.

In an embodiment, the first communication node may be a terminal device with the RFID technology, and the first communication node may communicate by using the backreflection technology.

The RFID technology is one of automatic identification technologies and implements contactless bi-directional data communication in a radio frequency manner, where an electronic tag or a radio frequency card is read and written in the radio frequency manner for the purpose of object identification and data exchanges. The first communication interface 10 may be understood as an interface for data transmission between the first communication node and the second communication node.

In this embodiment, the protocol layer of first Internet of things may include one or more of a first protocol layer of the first Internet of things, a second protocol layer of the first Internet of things, a third protocol layer of the first Internet of things, or a fourth protocol layer of the first Internet of things.

The first protocol layer of the first Internet of things may implement signal transmission, the second protocol layer of the first Internet of things may implement a processing function, the third protocol layer of the first Internet of things may implement a processing function, and the fourth protocol layer of the first Internet of things may implement a processing function using the target processing method.

A function of the first protocol layer of the first Internet of things includes transmitting data exchanged between the first communication node and the second communication node.

A function of the second protocol layer of the first Internet of things includes one or more of: generating a data packet, decoding a data packet, scheduling a data packet, transmitting a data packet, concatenating multiple data packets, extracting a data packet, maintaining a state, encryption, decryption, or integrity protection.

A function of the third protocol layer of the first Internet of things includes one or more of: maintaining the state, the encryption, the decryption, the integrity protection, storing a configuration, filling in a message, generating a message, or executing a control procedure.

A function of the fourth protocol layer of the first Internet of things includes processing data using one or more of the following target processing methods: the encryption, the decryption, or the integrity protection.

In an embodiment, the protocol layer of the first Internet of things may include the first protocol layer of the first Internet of things and the second protocol layer of the first Internet of things.

In an embodiment, the protocol layer of the first Internet of things may include the first protocol layer of the first Internet of things, the second protocol layer of the first Internet of things, and the fourth protocol layer of the first Internet of things.

In an embodiment, the protocol layer of the first Internet of things protocol layer may include the first protocol layer of the first Internet of things protocol layer 1, the second protocol layer of the first Internet of things, the third protocol layer of the first Internet of things, and the fourth protocol layer of the first Internet of things.

In this embodiment, the target communication node may include the first communication node and the third communication node. The target processing method may be understood as the method for processing data by the first communication node and the third communication node, and the target processing method may be a method determined after the first communication node negotiates with the second communication node. The target processing method may be a method indicated by the third communication node to the first communication node. How the first communication node and the second communication node determine the target processing method is not limited here as long as it is ensured that the first communication node and the second communication node use the same target processing method.

In this embodiment, the first communication node, the second communication node, and the third communication node are communication nodes in the Internet of things. The Internet of things may be a cellular Internet of things.

In this embodiment, the first communication node in the Internet of things performs data transmission with the second communication node through the protocol layer of the first Internet of things so that the first communication node accesses the Internet of things, thereby implementing data transmission between the communication nodes in the Internet of things.

In an embodiment, the protocol layer of the first Internet of things of the first communication interface includes the first protocol layer of the first Internet of things and the second protocol layer of the first Internet of things, where the function of the first protocol layer of the first Internet of things includes transmitting the data exchanged between the first communication node and the second communication node.

The function of the second protocol layer of the first Internet of things includes one or more of: generating the data packet, decoding the data packet, scheduling the data packet, transmitting the data packet, concatenating the multiple data packets, extracting the data packet, maintaining the state, the encryption, the decryption, or the integrity protection.

In this embodiment, the protocol layer of the first Internet of things may include the first protocol layer of the first Internet of things and the second protocol layer of the first Internet of things. The first protocol layer of the first Internet of things may be understood as an Internet of things port physical (IoT PHY) protocol layer of the first communication node, and the second protocol layer of the first Internet of things may be understood as an Internet of things media access control (IoT MAC) protocol layer of the first communication node.

In this embodiment, the function of the first protocol layer of the first Internet of things may include one or more of sending a signal or receiving a signal. Concatenating the multiple data packets may be understood as concatenating multiple messages of the first communication node or the third communication node. Maintaining the state may be understood as maintaining a state of a transmission process and a state of the first communication node. The state of the first communication node includes, but is not limited to, whether the first communication node is reachable, whether the first communication node is silent, whether the first communication node is inactive, and whether the first communication node is locked. The integrity protection may be understood as protecting integrity of the transmitted data.

In the case where the protocol layer of the first Internet of things does not include the fourth protocol layer of the first Internet of things, the function included in the fourth protocol layer of the first Internet of things may be integrated into the second protocol layer of the first Internet of things. The second protocol layer of the first Internet of things may perform one or more of the encryption, the decryption, or the integrity protection by using the target processing method.

In an embodiment, the data packet of the second protocol layer of the first Internet of things includes a first header and first data, where the first header includes one or more of a first data type, the length of a data packet included in the first data, processing indication information, a target identifier, or a source side identifier.

The first data type indicates a type of the data packet included in the first data.

The processing indication information indicates processing performed on the data packet included in the first data.

The target identifier indicates an identifier of a communication node that receives the data packet included in the first data.

The source side identifier indicates an identifier of a communication node that sends the data packet included in the first data.

The second protocol layer of the first Internet of things, a second protocol layer of the second Internet of things, and a second protocol layer of the fourth Internet of things in the present application may each have a function of generating a data packet, and the data packet may include a media access control (MAC) packet, a MAC unit, a MAC frame, and a protocol data unit (PDU).

The first data may be data transmitted from the third protocol layer of the first Internet of things, the fourth protocol layer of the first Internet of things, or the third communication node. Alternatively, the first data may be a data packet to be delivered to the third protocol layer of the first Internet of things, the fourth protocol layer of the first Internet of things, or the third communication node.

The data packet of the second protocol layer of the first Internet of things is exemplified below through an embodiment.

FIG. 2 is a structure diagram of a data packet according to an embodiment. As shown in FIG. 2, a form of the data packet is a header (that is, the first header) + data (that is, the first data).

The header may include a data type (that is, the first data type), the length of the data packet (that is, the length of the data packet included in the first data), a processing indication (that is, the processing indication information), the target identifier, and the source side identifier.

The data type refers to the type of the data packet carried, for example, which type of data or command. The processing indication refers to the processing performed on the data packet carried, for example, whether the encryption or integrity protection is performed. The length of the data packet refers to the length of the data packet carried. The target identifier refers to a destination identifier of the data packet, for example, an identifier of a receiver that receives the data packet. The source side identifier refers to a source identifier of the data packet, for example, an identifier of a sender that sends the data packet.

In an embodiment, the protocol layer of the first Internet of things further includes the third protocol layer of the first Internet of things, where the function of the third protocol layer of the first Internet of things includes one or more of: maintaining the state, the encryption, the decryption, the integrity protection, storing the configuration, filling in the message, generating the message, or executing the control procedure.

In this embodiment, the third protocol layer of the first Internet of things may be an IoT manage protocol layer of the first communication node. The function of the third protocol layer of the first Internet of things may include one or more of: maintaining the state, the encryption, the decryption, the integrity protection, storing the configuration, filling in the message, generating the message, or executing the control procedure. The function of the third protocol layer of the first Internet of things is not limited here.

Maintaining the state may be understood as maintaining the state of the transmission process and the state of the first communication node. Storing the configuration may be understood as storing configuration information from the second communication node to the first communication node, for example, configuration information in a radio resource control (RRC) message. Executing the control procedure may be understood as executing a related procedure of inventory or access control. The message may be control information exchanged between the second communication node and the first communication node.

It is to be noted that when the protocol layer of the first Internet of things includes both the second protocol layer of the first Internet of things and the third protocol layer of the first Internet of things, the function of the second protocol layer of the first Internet of things may not include the encryption, the decryption, or the integrity protection. Encryption, decryption, and integrity protection functions are implemented by the third protocol layer of the first Internet of things.

In an embodiment, the protocol layer of the first Internet of things further includes the fourth protocol layer of the first Internet of things, where the function of the fourth protocol layer of the first Internet of things includes processing data using one or more of the following target processing methods: the encryption, the decryption, or the integrity protection.

In this embodiment, the fourth protocol layer of the first Internet of things may be an IoT transfer protocol layer of the first communication node. The fourth protocol layer of the first Internet of things may process data using the target processing method. One or more of the encryption, the decryption, or the integrity protection may be performed using the target processing method. The content of the target processing method is not limited here.

The encryption may be understood as generating the data packet according to an encryption key or algorithm jointly determined by the first communication node and the third communication node. The decryption may be understood as decoding the data packet according to a decryption key or algorithm jointly determined by the first communication node and the third communication node. The integrity protection may be understood as generating or decoding the data packet according to an integrity protection algorithm jointly determined by the first communication node and the third communication node.

It is to be noted that when the protocol layer of the first Internet of things includes both the third protocol layer of the first Internet of things and the fourth protocol layer of the first Internet of things, the fourth protocol layer of the function of the first Internet of things may not include the encryption, the decryption, or the integrity protection. The encryption, decryption, and integrity protection functions are implemented by the third protocol layer of the first Internet of things.

FIG. 3 is a flowchart of a data transmission method according to an embodiment. As shown in FIG. 3, the data transmission method of this embodiment may be applied to the first communication node of any embodiment of the present application, and the method includes step 110.

In step 110, communication with a second communication node is performed through a protocol layer of a first Internet of things.

In this embodiment, data transmitted between the first communication node and the second communication node through the protocol layer of the first Internet of things is data processed by a target communication node using a target processing method, the target communication node includes the first communication node and a third communication node, the target processing method is a method for processing data by the first communication node and the third communication node, and the protocol layer of the first Internet of things is a protocol layer included in the first communication node in the Internet of things. A communication manner between the first communication node and the second communication node is not limited here.

In an embodiment, the first communication node may communicate with the second communication node or a fourth communication node through a first protocol layer of the first Internet of things and a second protocol layer of the first Internet of things included in the protocol layer of the first Internet of things.

In an embodiment, communication with the fourth communication node is performed through the first protocol layer of the first Internet of things and the second protocol layer of the first Internet of things included in the protocol layer of the first Internet of things so that the communication with the second communication node is performed via the fourth communication node. The second communication node may be a base station and the fourth communication node may be a relay.

In an embodiment, a data packet of the second protocol layer of the first Internet of things may include a first header and first data, where the first header includes one or more of a first data type, the length of a data packet included in the first data, processing indication information, a target identifier, or a source side identifier.

The first data type indicates a type of the data packet included in the first data.

The processing indication information indicates processing performed on the data packet included in the first data.

The target identifier indicates an identifier of a communication node that receives the data packet included in the first data.

The source side identifier indicates an identifier of a communication node that sends the data packet included in the first data.

In an embodiment, the first communication node may communicate with the second communication node through the first protocol layer of the first Internet of things, the second protocol layer of the first Internet of things, and a third protocol layer of the first Internet of things included in the protocol layer of the first Internet of things.

In an embodiment, the first communication node may communicate with the fourth communication node through the first protocol layer of the first Internet of things, the second protocol layer of the first Internet of things, and the third protocol layer of the first Internet of things included in the protocol layer of the first Internet of things to communicate with the second communication node via the fourth communication node.

In an embodiment, the first communication node may communicate with the second communication node through the first protocol layer of the first Internet of things, the second protocol layer of the first Internet of things, the third protocol layer of the first Internet of things, and a fourth protocol layer of the first Internet of things included in the protocol layer of the first Internet of things.

In an embodiment, the first communication node may communicate with the fourth communication node through the first protocol layer of the first Internet of things, the second protocol layer of the first Internet of things, the third protocol layer of the first Internet of things, and the fourth protocol layer of the first Internet of things included in the protocol layer of the first Internet of things to communicate with the second communication node via the fourth communication node.

In this embodiment, the first communication node may communicate with the second communication node through the protocol layer of the first Internet of things so that communication between communication nodes can be implemented in the Internet of things.

FIG. 4 is a structure diagram of a second communication node according to an embodiment. As shown in FIG. 4, the second communication node according to this embodiment includes a first communication interface 10 and a second communication interface 20.

The second communication node is connected to the first communication node of any embodiment of the present application through the first communication interface 10, the second communication node is connected to a third communication node through the second communication interface 20, and the second communication node forwards data exchanged between the first communication node and the third communication node.

Data transmitted between the second communication node and the first communication node through a first set protocol layer is data processed by a target communication node using a target processing method, the target communication node includes the first communication node and the third communication node, and the target processing method is a method for processing data by the first communication node and the third communication node.

The second communication node communicates with the third communication node through a second set protocol layer.

In this embodiment, the second communication node may be understood as a base station. The second communication interface 20 may be understood as an interface for data transmission between the second communication node and the third communication node.

In this embodiment, the first set protocol layer may include one or more of a first protocol layer of a second Internet of things, a second protocol layer of the second Internet of things, or a third protocol layer of the second Internet of things. In an embodiment, the first set protocol layer may include the first protocol layer of the second Internet of things and the second protocol layer of the second Internet of things. In an embodiment, the first set protocol layer may include the first protocol layer of the second Internet of things, the second protocol layer of the second Internet of things, and the third protocol layer of the second Internet of things.

In this embodiment, the first set protocol layer may further include a first user plane protocol stack or a first control plane protocol stack.

In this embodiment, the second set protocol layer may include a fourth protocol layer of the second Internet of things. In this embodiment, the second communication node in the Internet of things implements data transmission with the first communication node through the first set protocol layer and implements data transmission with the third communication node through the second set protocol layer, thereby implementing data transmission between communication nodes in the Internet of things.

In an embodiment, the first set protocol layer of the first communication interface 10 includes the first protocol layer of the second Internet of things and the second protocol layer of the second Internet of things, where a function of the first protocol layer of the second Internet of things includes transmitting data exchanged between the first communication node and the second communication node.

A function of the second protocol layer of the second Internet of things includes one or more of: generating a data packet, decoding a data packet, scheduling a data packet, transmitting a data packet, concatenating multiple data packets, or maintaining a state.

In this embodiment, the first protocol layer of the second Internet of things may be understood as an IoT PHY protocol layer of the second communication node, and the second protocol layer of the second Internet of things may be understood as an IoT MAC protocol layer of the second communication node.

In this embodiment, the function of the first protocol layer of the second Internet of things may include one or more of receiving a signal or sending a signal. For example, the second communication node may receive, through the first protocol layer of the second Internet of things, data fed back by the first communication node to the second communication node; and the second communication node may send data to the first communication node through the first protocol layer of the second Internet of things.

In this embodiment, the function of the second protocol layer of the second Internet of things may include one or more of: generating the data packet, decoding the data packet, scheduling the data packet, transmitting the data packet, concatenating the multiple data packets, or maintaining the state. The function of the second protocol layer of the second Internet of things is not limited here.

In an embodiment, the first set protocol layer of the first communication interface 10 may include the first protocol layer of the second Internet of things and the second protocol layer of the second Internet of things, and the second communication node 20 may exchange data with the first communication node through the first communication interface 10.

In an embodiment, the first set protocol layer of the first communication interface 10 may include the first protocol layer of the second Internet of things and the second protocol layer of the second Internet of things, and the second communication node 20 may exchange data with a fourth communication node through the first communication interface 10 so that the fourth communication node forwards the data from the second communication node 20 to the first communication node.

In an embodiment, the first set protocol layer further includes the third protocol layer of the second Internet of things.

A function of the third protocol layer of the second Internet of things includes one or more of: maintaining the state, storing a configuration, filling in a message, or generating a message.

In this embodiment, the third protocol layer of the second Internet of things may be understood as an IoT manage protocol layer of the second communication node 20. The function of the third protocol layer of the second Internet of things may include one or more of: maintaining the state, storing the configuration, filling in the message, or generating the message. The function of the third protocol layer of the second Internet of things is not limited here.

In an embodiment, filling in the message may be filling in, for example, an RRC message carrying a non-access stratum (NAS) data packet.

In an embodiment, the second set protocol layer includes the fourth protocol layer of the second Internet of things, where a function of the fourth protocol layer of the second Internet of things includes one or more of the functions below.

Data between the second communication node and the third communication node is generated based on an interface rule between the second communication node and the third communication node.

Data exchanged between the third communication node and the second communication node is transmitted.

Data transmitted from the third communication node is parsed.

In this embodiment, the fourth protocol layer of the second Internet of things may be understood as an Internet of things access point (IoT AP) protocol layer of the second communication node. The function of the fourth protocol layer of the second Internet of things may include one or more of: generating, based on the interface rule between the second communication node and the third communication node, the data between the second communication node and the third communication node; transmitting the data exchanged between the third communication node and the second communication node; or parsing the data transmitted from the third communication node. The function of the fourth protocol layer of the second Internet of things is not limited here. In this embodiment, the second set protocol layer of the second communication interface 20 includes the fourth protocol layer of the second Internet of things, and the second communication node may exchange data with the third communication node through the second communication interface 20.

In an embodiment, the first set protocol layer includes the first user plane protocol stack.

In this embodiment, the first user plane protocol stack may be understood as a user plane protocol stack of the second communication node. It is to be understood that when the second communication node has the first user plane protocol stack, the second communication node may process a data packet and send the data packet to the fourth communication node through the first user plane protocol stack to forward data to the first communication node via the fourth communication node and complete an exchange with the first communication node.

In this embodiment, the first user plane protocol stack may include one or more of: a Service Data Adaptation Protocol (SDAP) layer, a Packet Data Convergence Protocol (PDCP) layer, a radio link control (RLC) protocol layer, a MAC protocol layer, or a port physical (PHY) protocol layer.

In an embodiment, the first set protocol layer includes the first control plane protocol stack.

In this embodiment, the first control plane protocol stack may be understood as a control plane protocol stack of the second communication node. It is to be understood that when the second communication node has the first control plane protocol stack, the second communication node may process the data packet and send the data packet to the fourth communication node through the first control plane protocol stack to forward the data to the first communication node via the fourth communication node and complete the exchange with the first communication node.

In this embodiment, the first control plane protocol stack may include one or more of: an RRC protocol layer, the PDCP layer, the RLC protocol layer, the MAC protocol layer, or the PHY protocol layer.

In an embodiment, a message of a control plane received from the third communication node includes first control information and a first data packet, the first data packet includes a command of the third communication node, and the first control information includes one or more of a first message type, an identifier of the first communication node, a connection identifier, first indication information, or the length of the first data packet.

The first message type indicates a type of the first data packet.

The connection identifier indicates an identifier of a connection between the second communication node and the third communication node.

The first indication information indicates processing performed on the first data packet.

In this embodiment, the first control information may be understood as control information included in the message of the control plane received from the third communication node, and the first data packet may be understood as a data packet included in the message of the control plane received from the third communication node.

In this embodiment, the first control information may include one or more of the first message type, the identifier of the first communication node, the connection identifier, or the first indication information. The content of the first control information is not limited here.

In an example embodiment, an upper-layer node (that is, the third communication node) sends control signaling to the base station (that is, the second communication node) through the message of the control plane. The upper-layer node sends the message to the base station, where the message includes the command for a terminal (that is, the first communication node). For example, the upper-layer node encapsulates a read operation into a data packet (that is, the first data packet) in an IoT transfer protocol layer, carries the data packet in signaling in an IoT AP protocol layer, and sends the signaling to the base station.

A specific form of the message is "control information (that is, the first control information) + data packet (that is, the first data packet)", where the data packet includes the command of the upper-layer node, and the control information may include a message type (that is, the first message type), an identifier of the terminal (that is, the identifier of the first communication node), the length of the data packet (that is, the length of the first data packet), the connection identifier, and an information indication (that is, the first indication information).

The message type refers to a type of a message carried, for example, which type of command.

The identifier of the terminal may include identifiers of multiple terminals or one identifier associated with multiple terminals.

The connection identifier may include an identifier of a connection between the base station and the upper-layer node.

The information indication may refer to an indication of processing performed on the data packet carried, for example, whether encryption or integrity protection is performed.

The length of the data packet may refer to the length of the data packet carried.

In an embodiment, a message sent to the third communication node through a control plane includes second control information and a second data packet, the second data packet includes feedback of the first communication node, and the second control information includes one or more of a second message type, the identifier of the first communication node, the connection identifier, second indication information, or the length of the second data packet.

The second message type indicates a type of the second data packet.

The connection identifier indicates the identifier of the connection between the second communication node and the third communication node.

The second indication information indicates processing performed on the second data packet.

In this embodiment, the second control information may be understood as control information included in the message sent by the second communication node to the third communication node through the control plane, and the second data packet may be understood as a data packet included in the message sent by the second communication node to the third communication node through the control plane.

In this embodiment, the second control information may include one or more of the second message type, the identifier of the first communication node, the connection identifier, the second indication information, or the length of the second data packet. The content of the second control information is not limited here.

In an example embodiment, the base station sends feedback of the terminal to the upper-layer node (that is, the third communication node) through the message of the control plane. The base station completes a transmission process of the message instead of parsing the message. After performing the transmission process, the base station sends the feedback of the terminal to a core network (that is, the third communication node), where the message sent to the core network includes the feedback of the terminal. For example, the terminal encapsulates feedback for the read operation into a data packet (that is, the second data packet) in an IoT transfer protocol layer and sends the data packet to the base station. After receiving the data packet, the base station carries the data packet in signaling in the IoT AP protocol layer and reports a result of the read operation to the core network.

A specific form of the message is "control information (that is, the second control information) + data packet (that is, the second data packet)", where the data packet includes the feedback of the terminal, and the control information may include a data type (that is, the second message type), the identifier of the terminal (that is, the identifier of the first communication node), the length of the data packet (that is, the length of the second data packet), the connection identifier, and an information indication (that is, the second indication information).

The data type refers to a type of the data packet carried (that is, the second data packet), for example, which type of data or command.

The identifier of the terminal may include identifiers of multiple terminals or one identifier associated with multiple terminals.

The connection identifier may be the identifier of the connection between the base station and the upper-layer node.

The information indication may refer to an indication of processing performed on the data packet carried, for example, whether the encryption or integrity protection is performed.

The length of the data packet may refer to the length of the data packet carried.

In an embodiment, a data packet of a user plane received from the third communication node includes a second header and a third data packet, the third data packet includes the command of the third communication node, and the second header includes one or more of a second data type, the identifier of the first communication node, third indication information, or the length of the third data packet.

The second data type indicates a type of the third data packet.

The third indication information indicates processing performed on the third data packet.

In this embodiment, the third data packet may be understood as an encapsulated data packet, for example, a MAC PDU data packet. The second header may be understood as a header included in the data packet of the user plane received by the second communication node from the third communication node, and the second header may include one or more of the second data type, the identifier of the first communication node, the third indication information, or the length of the third data packet. The content of the third data packet is not limited here.

In an example embodiment, the upper-layer node sends the control signaling to the base station through the data packet of the user plane. The upper-layer node sends the data packet to the base station, where the data packet carries the content of the command. For example, the upper-layer node encapsulates the read operation into a data packet (that is, the third data packet) in the IoT transfer protocol layer, generates the data packet in the IoT AP protocol layer, and sends the data packet to the base station.

A specific form of the data packet is "header (that is, the second header) + encapsulated data packet (that is, the third data packet)", where the encapsulated data packet includes the command of the upper-layer node, and the header may include a data type (that is, the second data type), the identifier of the terminal (that is, the identifier of the first communication node), the length of the data packet (that is, the length of the third data packet), and an information indication (that is, the third indication information).

The data type may refer to a type of the data packet carried (that is, the third data packet), for example, which type of data or command.

The identifier of the terminal may include the identifiers of the multiple terminals or the one identifier associated with the multiple terminals.

The information indication (that is, the third indication information) may refer to an indication of processing performed on the data packet carried, for example, whether the encryption or integrity protection is performed.

The length of the data packet may refer to the length of the data packet carried.

In an embodiment, a data packet transmitted to the third communication node through a user plane includes a third header and a fourth data packet, the fourth data packet includes the feedback of the first communication node, and the third header includes one or more of a third data type, the identifier of the first communication node, fourth indication information, or the length of the fourth data packet.

The third data type indicates a type of the fourth data packet.

The fourth indication information indicates processing performed on the fourth data packet.

In this embodiment, the fourth data packet may be understood as an encapsulated data packet. The third header may be understood as a header included in the data packet transmitted by the second communication node to the third communication node through the user plane. The third header may include one or more of the third data type, the identifier of the first communication node, the fourth indication information, or the length of the fourth data packet. The content of the fourth data packet is not limited here.

In an example embodiment, the base station sends the feedback of the terminal to the upper-layer node through the data packet of the user plane. The base station completes a transmission process of the data packet instead of parsing the data packet. After performing the transmission process, the base station sends the feedback of the terminal to the core network, where the message sent to the core network includes the feedback of the terminal. For example, the terminal encapsulates the feedback for the read operation into a data packet (that is, the fourth data packet) in the IoT transfer protocol layer and sends the data packet to the base station. After receiving the data packet, the base station carries the data packet through the user plane in the IoT AP protocol layer and reports the result of the read operation to the core network.

A specific form of the data packet is "header (that is, the third header) + encapsulated data packet (that is, the fourth data packet)", where the encapsulated data packet includes the feedback of the terminal, and the header may include a data type (that is, the third data type), the identifier of the terminal (that is, the identifier of the first communication node), the length of the data packet (that is, the length of the fourth data packet), and an information indication (that is, the fourth indication information).

The data type may refer to a type of the data packet carried (that is, the fourth data packet), for example, which type of data or command.

The identifier of the terminal may include the identifiers of the multiple terminals or the one identifier associated with the multiple terminals.

The information indication may refer to an indication of processing performed on the data packet carried, for example, whether the encryption or integrity protection is performed.

The length of the data packet may refer to the length of the data packet carried.

In an embodiment, a message received from the third communication node includes one or more of: type information of the first communication node, that is, indication information of a preset terminal; the identifier of the first communication node; partial information of the identifier of the first communication node; a range within which the message is sent; a message type; a data packet; a size of a data packet; or an identifier of the fourth communication node.

In this embodiment, the preset terminal may be understood as, for example, a terminal based on the RFID technology. The size of the data packet may be understood as the number of feedback messages of the first communication node included in the data packet.

In this embodiment, the third communication node may trigger the second communication node to establish a connection with the first communication node, and the third communication node sends the message to the second communication node, where the message may include a paging message or another message. The message may include one or more of the indication information of the preset terminal, the identifier of the first communication node, the partial information of the identifier of the first communication node, the data packet, or the message type.

In this embodiment, after receiving the feedback of the first communication node, the second communication node may send information about the first communication node to the third communication node. A message may include initial information about the first communication node, an UPLINK NAS TRANSPORT message, or another message. The message may include one or more of the indication information of the preset terminal, the identifier of the first communication node, the partial information of the identifier of the first communication node, a data packet, or a size of a data packet. The data packet may carry the identifier of the first communication node, an encryption key, encryption and decryption algorithms, an integrity protection algorithm, and an agreement between a network and the first communication node.

In this embodiment, the third communication node may choose to release the first communication node, and the message sent to the second communication node may include a first communication node context release command or another message. The message may include one or more of the indication information of the preset terminal, the identifier of the first communication node, or the partial information of the identifier of the first communication node.

In this embodiment, the third communication node may trigger the establishment of the connection with the first communication node, and the third communication node sends the message to the second communication node, where the message may include the paging message or another message. The message may include one or more of the indication information of the preset terminal, the identifier of the first communication node, the partial information of the identifier of the first communication node, the identifier of the fourth communication node, the range within which the message is sent, the data packet, or the message type. The data packet may carry the identifier of the first communication node, the encryption key, the encryption and decryption algorithms, the integrity protection algorithm, and an agreement between the second communication node and the first communication node.

In this embodiment, the third communication node may initiate an access procedure to the first communication node according to the feedback from the second communication node. The third communication node sends the message to the second communication node, where the message may include a DOWNLINK NAS TRANSPORT message or another message. The message may include one or more of the indication information of the preset terminal, the identifier of the first communication node, the partial information of the identifier of the first communication node, the data packet, or the size of the data packet. The data packet may include access messages for multiple first communication nodes.

In an embodiment, the message received from the third communication node includes one or more of: the type information of the first communication node, that is, the indication information of the preset terminal; the identifier of the first communication node; partial data of the identifier of the first communication node; the range within which the message is sent; an identifier of a group of first communication nodes; a resource for the connection between the second communication node and the third communication node; the data packet including the feedback of the first communication node; or the size of the data packet.

In this embodiment, the third communication node triggers the second communication node to establish the connection with the first communication node, and the third communication node sends the message to the second communication node, where the message may include the DOWNLINK NAS TRANSPORT message or another message. The message may include one or more of the indication information of the preset terminal, the identifier of the first communication node, the partial information of the identifier of the first communication node, the range within which the message is sent, the identifier of the group of first communication nodes, the resource for the connection between the second communication node and the third communication node, the data packet, or the size of the data packet. The data packet may include the access messages for the multiple first communication nodes.

In an embodiment, a message sent to the third communication node includes one or more of: the indication information of the preset terminal, the identifier of the first communication node, the partial information of the identifier of the first communication node, a size of a data packet, or a data packet including the feedback of the first communication node.

In this embodiment, after receiving the feedback of the first communication node, the second communication node sends the information about the first communication node to the third communication node. The sent message may include the initial information about the first communication node, the UPLINK NAS TRANSPORT message, or another message. The message may include one or more of the indication information of the preset terminal, the identifier of the first communication node, the partial information of the identifier of the first communication node, the data packet, or the size of the data packet. The data packet may include feedback messages of multiple first communication nodes.

In this embodiment, after receiving the feedback of the first communication node, the second communication node determines a selected first communication node and sends information about the first communication node to the third communication node. The sent message may include the UPLINK NAS TRANSPORT message, an NAS DELIVERY INDICATION message, or another message. The message may include one or more of the indication information of the preset terminal, the identifier of the first communication node, the partial information of the identifier of the first communication node, the data packet, or the size of the data packet. The data packet may include the feedback messages of the multiple first communication nodes.

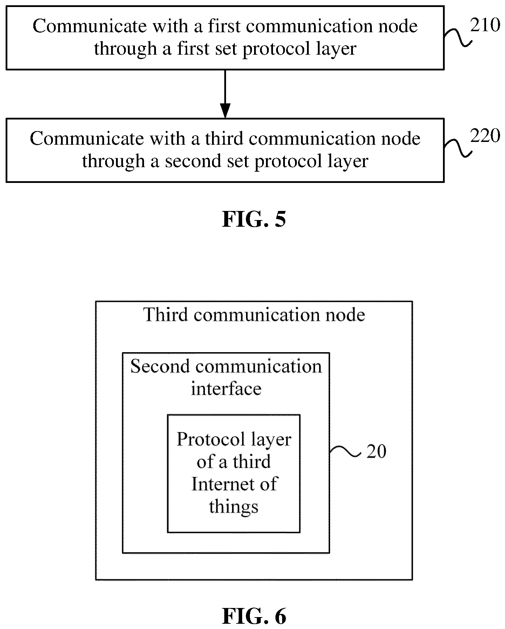

FIG. 5 is a flowchart of another data transmission method according to an embodiment. As shown in FIG. 5, the data transmission method of this embodiment may be applied to the second communication node of any embodiment of the present application, and the method includes step 210 and step 220.

In step 210, communication with a first communication node is performed through a first set protocol layer.

In step 220, communication with a third communication node is performed through a second set protocol layer.

In this embodiment, the second communication node may communicate with the first communication node through the first set protocol layer of a first communication interface, data transmitted between the second communication node and the first communication node through the first set protocol layer is data processed by a target communication node using a target processing method, the target communication node includes the first communication node and the third communication node, and the target processing method is a method for processing data by the first communication node and the third communication node. The second communication node may communicate with the third communication node through the second set protocol layer of a second communication interface.

In an embodiment, the second communication node may communicate with the first communication node through a first protocol layer of a second Internet of things and a second protocol layer of the second Internet of things included in the first set protocol layer.

In an embodiment, the second communication node may communicate with a fourth communication node through the first protocol layer of the second Internet of things and the second protocol layer of the second Internet of things included in the first set protocol layer to communicate with the first communication node via the fourth communication node.

In an embodiment, the second communication node may communicate with the first communication node through the first protocol layer of the second Internet of things, the second protocol layer of the second Internet of things, and a third protocol layer of the second Internet of things included in the first set protocol layer.

In an embodiment, the second communication node may communicate with the third communication node through a fourth protocol layer of the second Internet of things included in the second set protocol layer.

In an embodiment, the first set protocol layer may further include a first user plane protocol stack. The second communication node may communicate with the fourth communication node through an SDAP layer, a PDCP layer, an RLC protocol layer, a MAC protocol layer, and a PHY protocol layer.

In an embodiment, the first set protocol layer may further include a first control plane protocol stack. The second communication node may communicate with the fourth communication node through an RRC protocol layer, the PDCP layer, the RLC protocol layer, the MAC protocol layer, and the PHY protocol layer.

In this embodiment, the second communication node in the Internet of things communicates with the first communication node through the first set protocol layer and communicates with the third communication node through the second set protocol layer so that communication between communication nodes in the Internet of things can be implemented.

In an embodiment, a message of a control plane received from the third communication node includes first control information and a first data packet, the first data packet includes a command of the third communication node, and the first control information includes one or more of a first message type, an identifier of the first communication node, a connection identifier, first indication information, or the length of the first data packet.

The first message type indicates a type of the first data packet.

The connection identifier indicates an identifier of a connection between the second communication node and the third communication node.

The first indication information indicates processing performed on the first data packet.

In an embodiment, a message sent to the third communication node through a control plane includes second control information and a second data packet, the second data packet includes feedback of the first communication node, and the second control information includes one or more of a second message type, the identifier of the first communication node, the connection identifier, second indication information, or the length of the second data packet.

The second message type indicates a type of the second data packet.

The connection identifier indicates the identifier of the connection between the second communication node and the third communication node.

The second indication information indicates processing performed on the second data packet.

In an embodiment, a data packet of a user plane received from the third communication node includes a second header and a third data packet, the third data packet includes the command of the third communication node, and the second header includes one or more of a second data type, the identifier of the first communication node, third indication information, or the length of the third data packet.

The second data type indicates a type of the third data packet.

The third indication information indicates processing performed on the third data packet.

In an embodiment, a data packet transmitted to the third communication node through a user plane includes a third header and a fourth data packet, the fourth data packet includes the feedback of the first communication node, and the third header includes one or more of a third data type, the identifier of the first communication node, fourth indication information, or the length of the fourth data packet.

The third data type indicates a type of the fourth data packet.

The fourth indication information indicates processing performed on the fourth data packet.

In an embodiment, the data packet transmitted to the third communication node through the user plane includes the third header and the fourth data packet, the fourth data packet includes the feedback of the first communication node, and the third header includes one or more of the third data type, the identifier of the first communication node, the fourth indication information, or the length of the fourth data packet.

The third data type indicates the type of the fourth data packet.

The fourth indication information indicates the processing performed on the fourth data packet.

In an embodiment, a message received by the second communication node from the third communication node includes one or more of: indication information of a preset terminal; the identifier of the first communication node; partial information of the identifier of the first communication node; a range within which the message is sent; a message type; a data packet; a size of a data packet; or an identifier of the fourth communication node.

In an embodiment, a message sent by the second communication node to the third communication node includes one or more of: the indication information of the preset terminal; the identifier of the first communication node; the partial information of the identifier of the first communication node; a size of a data packet; or a data packet including the feedback of the first communication node.

In an embodiment, the message received by the second communication node from the third communication node includes one or more of: the indication information of the preset terminal; the identifier of the first communication node; partial data of the identifier of the first communication node; the range within which the message is sent; an identifier of a group of first communication nodes; a resource for the connection between the second communication node and the third communication node; a data packet including an access message of the first communication node; or a size of a data packet.

FIG. 6 is a structure diagram of a third communication node according to an embodiment. As shown in FIG. 6, the third communication node according to this embodiment includes a second communication interface 20.

The third communication node is connected to the second communication node of any embodiment of the present application through the second communication interface 20, data transmitted between the third communication node and the second communication node through a protocol layer of a third Internet of things is data processed by a target communication node using a target processing method, the target communication node includes a first communication node and the third communication node, and the target processing method is a method for processing data by the first communication node and the third communication node.

In this embodiment, the third communication node may be understood as an upper-layer node, for example, a core network. The third communication node may perform data transmission with the first communication node via the second communication node. The protocol layer of the third Internet of things may include a first protocol layer of the third Internet of things and a second protocol layer of the third Internet of things.

In this embodiment, the third communication node in the Internet of things may perform data transmission with the second communication node through the protocol layer of the third Internet of things so that the third communication node can access a cellular Internet of things, thereby implementing data transmission between communication nodes in the Internet of things.

In an embodiment, the protocol layer of the third Internet of things of the second communication interface 20 includes the first protocol layer of the third Internet of things, where a function of the first protocol layer of the third Internet of things includes one or more of the functions below.

Data between the second communication node and the third communication node is generated based on an interface rule between the second communication node and the third communication node.

Data exchanged between the third communication node and the second communication node is transmitted.

Data transmitted from the second communication node is parsed.

In this embodiment, the first protocol layer of the third Internet of things may be understood as an IoT AP protocol layer of the third communication node.

In an embodiment, the protocol layer of the third Internet of things of the second communication interface 20 includes the second protocol layer of the third Internet of things, where a function of the second protocol layer of the third Internet of things includes one or more of encryption, decryption, or integrity protection.

In this embodiment, the second protocol layer of the third Internet of things may be understood as an IoT transfer protocol layer of the third communication node.

In an embodiment, the third communication node includes a first network element, a second network element, and a third network element, and data transmitted by the first communication node to the third communication node is transmitted to the first network element after being forwarded by the third network element and the second network element.

In this embodiment, the third communication node may transmit data to the second communication node through the first network element, the second network element, and the third network element in sequence, and the second communication node forwards the data to the first communication node; and the data transmitted by the first communication node to the third communication node via the second communication node may be transmitted to the first network element through the third network element and the second network element in sequence.

The first network element may be a User Plane Function (UPF), the second network element may be a Session Management Function (SMF), and the third network element may be an Authentication Management Function (AMF).

In an embodiment, a message sent by the first network element to the second network element includes one or more of: an identifier of a server; connection information; information about the first communication node; or command information.

In this embodiment, the server may serve as the upper-layer node. The connection information may be understood as information about a connection between the server and the first communication node or information about a connection between the server and the second communication node, and the connection information may include an identifier or resource corresponding to the connection. The information about the first communication node may be information about one or more first communication nodes, and the information about the first communication node may include whether the first communication node is an Internet of things communication node, an identifier of the first communication node, and a type of the first communication node. The command information may include a type of a command, the content of the command, and an object of the command.

In an embodiment, a message sent by the second network element to the first network element includes one or more of: the information about the first communication node; the command information; a capability of the first communication node; a state of the first communication node; or subscription information of the first communication node.

In this embodiment, the capability of the first communication node may be understood as a function supportable by the first communication node, for example, a rate, modulation scheme, and access control command supported by the first communication node. The state of the first communication node may include whether the first communication node is reachable, whether the first communication node is silent, whether the first communication node is inactive, and whether the first communication node is locked. The subscription information of the first communication node may be understood as some information maintained in a memory of the first communication node. The information may be written before a network access and includes an operator, network, and server supported by the first communication node.

The preceding process is exemplified below through one embodiment.

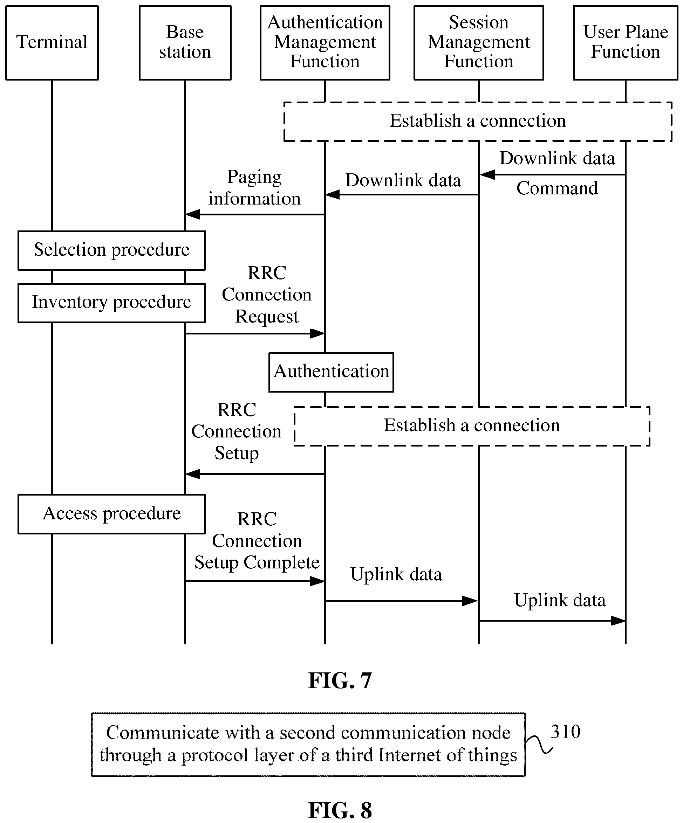

FIG. 7 is a flowchart of data transmission between a second communication node and a third communication node according to an embodiment. As shown in FIG. 7, the server sends the command to the core network (that is, the third communication node), and according to the command, the core network establishes a connection with a base station (that is, the second communication node), initiates a procedure, and sends the command to the base station. The process is described below.

The server is connected to the core network and sends the command to the UPF (that is, the first network element) through an interface.

After receiving the command, the UPF sends the message to the SMF (that is, the second network element), where the message may carry the identifier of the server, the connection information, information about a terminal (that is, the information about the first communication node), and the command information.

The connection information may be understood as an identifier or resource corresponding to a connection if the core network establishes the connection between the server and the terminal or between the server and the base station.

The information about the terminal may include whether the terminal is an IoT terminal, an identifier of the terminal, and a type of the terminal. The information about the terminal may be information about multiple terminals.

The command information includes the type of the command, the content of the command, and the object of the command.

After receiving a data packet, the SMF initiates the procedure to the AMF (that is, the third network element) according to the information about the terminal or the command information. The SMF transmits to the AMF the information about the terminal, the command information, a capability of the terminal, a state of the terminal, and subscription information of the terminal.

The AMF determines, according to the information about the terminal or the command information, a base station to which the procedure is initiated and initiates a trigger procedure to trigger the base station to perform selection and inventory on the terminal under the base station.

After receiving feedback from the base station, the AMF authenticates a data packet according to the information about the terminal. If the data packet is correct, a service is provided for the terminal, and the subsequent process is initiated. A message for executing the command is initiated to the base station, where the message may carry an encryption command for the terminal.

If the core network establishes no connection between the server and the terminal or between the server and the base station, the AMF initiates a connection setup procedure.

After receiving the feedback of the terminal, the AMF forwards the data packet to the SMF.

The SMF forwards the data packet to the UPF.

FIG. 8 is a flowchart of another data transmission method according to an embodiment. As shown in FIG. 8, the data transmission method of this embodiment may be applied to the third communication node of any embodiment of the present application, and the method includes step 310.

In step 310, communication with a second communication node is performed through a protocol layer of a third Internet of things.

In this embodiment, the protocol layer of the third Internet of things may include a first protocol layer of the third Internet of things and a second protocol layer of the third Internet of things.

In an embodiment, the third communication node may perform encryption and integrity protection on a data packet through the second protocol layer of the third Internet of things and send data to the second communication node through the first protocol layer of the third Internet of things.

In this embodiment, the third communication node in the Internet of things may communicate with the second communication node through the protocol layer of the third Internet of things so that the third communication node communicating with a first communication node can access the Internet of things, thereby implementing communication between communication nodes in the Internet of things.

In an embodiment, the third communication node includes a first network element, a second network element, and a third network element, and data transmission is performed between the first communication node and the third communication node through the first network element, the second network element, and the third network element.

In an embodiment, a message sent by the first network element to the second network element includes one or more of: an identifier of a server; connection information; information about the first communication node; or command information.

In this embodiment, the connection information may be understood as information about a connection between the third communication node and the second communication node, for example, an identifier of the connection and a resource associated with the connection. The information about the first communication node may include an identifier of the first communication node and a type of the first communication node. The command information may include a type of a command and an identifier of the command.

In an embodiment, a message sent by the second network element to the first network element includes one or more of: the information about the first communication node; the command information; a capability of the first communication node; a state of the first communication node; or subscription information of the first communication node.

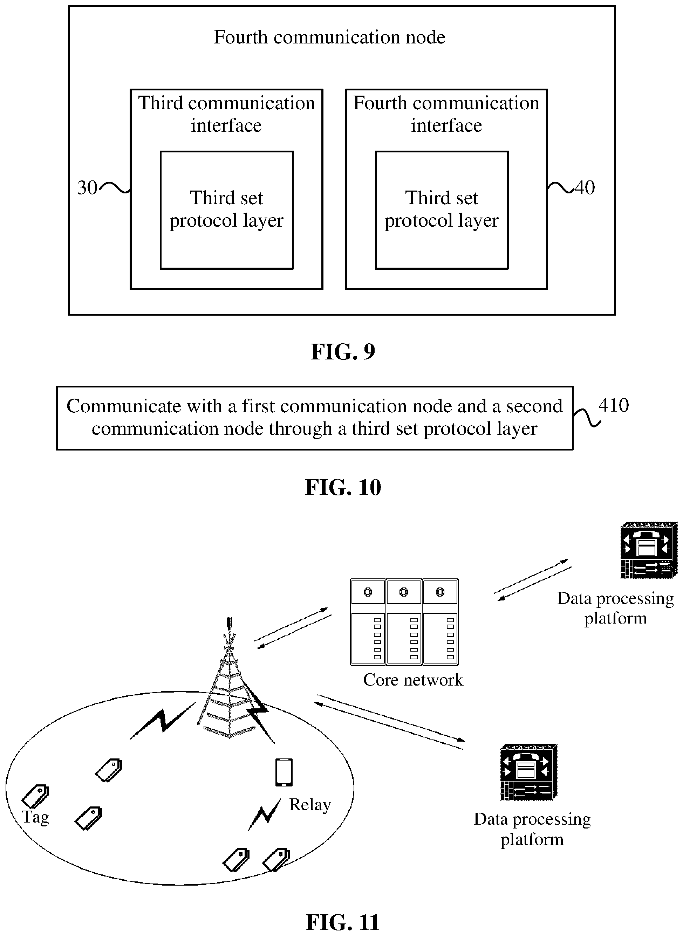

FIG. 9 is a structure diagram of a fourth communication node according to an embodiment. As shown in FIG. 9, the fourth communication node according to this embodiment includes a third communication interface 30 and a fourth communication interface 40.

The fourth communication node is connected to the first communication node of any embodiment of the present application through the third communication interface 30, the fourth communication node is connected to a second communication node through the fourth communication interface 40, the fourth communication node forwards, through a third set protocol layer, data transmitted between the second communication node and the first communication node, the data transmitted between the second communication node and the first communication node is data processed by a target communication node using a target processing method, the target communication node includes the first communication node and a third communication node, and the target processing method is a method for processing data by the first communication node and the third communication node.

In this embodiment, the fourth communication node may be a communication node for data forwarding, for example, a relay. The third communication interface 30 may be an interface for data transmission between the first communication node and the fourth communication node. The fourth communication interface 40 may be an interface for data transmission between the fourth communication node and the second communication node. The third set protocol layer may include a protocol layer of a fourth Internet of things; and a second user plane protocol stack or a second control plane protocol stack.

In this embodiment, the fourth communication node may serve as a data forwarding node to forward data exchanged between the first communication node and the second communication node.

In this embodiment, the third set protocol layer may include the protocol layer of the fourth Internet of things; and the second user plane protocol stack or the second control plane protocol stack.

In this embodiment, the fourth communication node in the Internet of things forwards, through the third set protocol layer, the data transmitted between the second communication node and the first communication node so that the fourth communication node communicating with the first communication node can access the Internet of things, thereby implementing data transmission between communication nodes in the Internet of things.

In an embodiment, the third set protocol layer includes the protocol layer of the fourth Internet of things, and the protocol layer of the fourth Internet of things includes a first protocol layer of the fourth Internet of things and a second protocol layer of the fourth Internet of things, where a function of the first protocol layer of the fourth Internet of things includes transmitting the data exchanged between the first communication node and the second communication node.

A function of the second protocol layer of the fourth Internet of things includes one or more of: generating a data packet, decoding a data packet, scheduling a data packet, transmitting a data packet, concatenating multiple data packets, or maintaining a state.

In this embodiment, the first protocol layer of the fourth Internet of things may be understood as an IoT PHY protocol layer of the fourth communication node. The second protocol layer of the fourth Internet of things may be understood as an IoT MAC protocol layer of the fourth communication node.

In this embodiment, the function of the second protocol layer of the fourth Internet of things may include one or more of: generating the data packet, decoding the data packet, scheduling the data packet, transmitting the data packet, concatenating the multiple data packets, or maintaining the state. The function of the second protocol layer of the fourth Internet of things is not limited here.

In an embodiment, the third set protocol layer includes the second user plane protocol stack or the second control plane protocol stack.

In this embodiment, the third set protocol layer may include the second user plane protocol stack, and the fourth communication node may perform data transmission with the second communication node through the second user plane protocol stack.

The second user plane protocol stack may include an SDAP layer, a PDCP layer, an RLC protocol layer, a MAC protocol layer, and a PHY protocol layer.

In this embodiment, the third set protocol layer may include the second control plane protocol stack, and the fourth communication node may perform data transmission with the second communication node through the second control plane protocol stack.

The second control plane protocol stack may include an RRC protocol layer, the PDCP layer, the RLC protocol layer, the MAC protocol layer, and the PHY protocol layer.

FIG. 10 is a flowchart of another data transmission method according to an embodiment. As shown in FIG. 10, the data transmission method of this embodiment may be applied to the fourth communication node of any embodiment of the present application, and the method includes step 410.

In step 410, communication with a first communication node and a second communication node is performed through a third set protocol layer.

In this embodiment, the fourth communication node forwards, through the third set protocol layer, data transmitted between the second communication node and the first communication node, the data transmitted between the second communication node and the first communication node is data processed by a target communication node using a target processing method, the target communication node includes the first communication node and a third communication node, and the target processing method is a method for processing data by the first communication node and the third communication node.

In this embodiment, the fourth communication node may communicate with the first communication node through a first protocol layer of the fourth Internet of things and a second protocol layer of the fourth Internet of things included in the third set protocol layer.

In this embodiment, the fourth communication node may communicate with the second communication node through a second user plane protocol stack or a second control plane protocol stack included in the third set protocol layer.

In this embodiment, the fourth communication node in the Internet of things may communicate with the first communication node and the second communication node separately so that communication between communication nodes in the Internet of things can be implemented.

In the present application, the second communication node, the third communication node, and the fourth communication node may not only communicate with the first communication node of the present application performing passive communication but also communicate with a first communication node performing active communication.

A process of data transmission between communication nodes is exemplified below through different embodiments. It is to be noted that for technical details not described in this embodiment, reference may be made to any one of the preceding embodiments.

FIG. 11 is a network deployment diagram of a cellular Internet of Things according to an embodiment. As shown in FIG. 11, a data processing platform is responsible for managing and operating on a tag (that is, a first communication node) and maintaining tag data. A core network is responsible for transmitting data of the data processing platform to a base station (that is, a second communication node) or transmitting data of the base station to the data processing platform. The base station is responsible for operating on the tag and sending data transmitted by the core network to the tag or sending data of the tag to the core network (that is, a third communication node). In a scenario with a relay (that is, a fourth communication node), the relay is responsible for converting a command of the base station into a command identifiable by the tag and sending the command to the tag.

Embodiment one: In a scenario without a relay, a communication architecture of a cellular Internet of Things includes an upper-layer node, a base station, and a terminal.

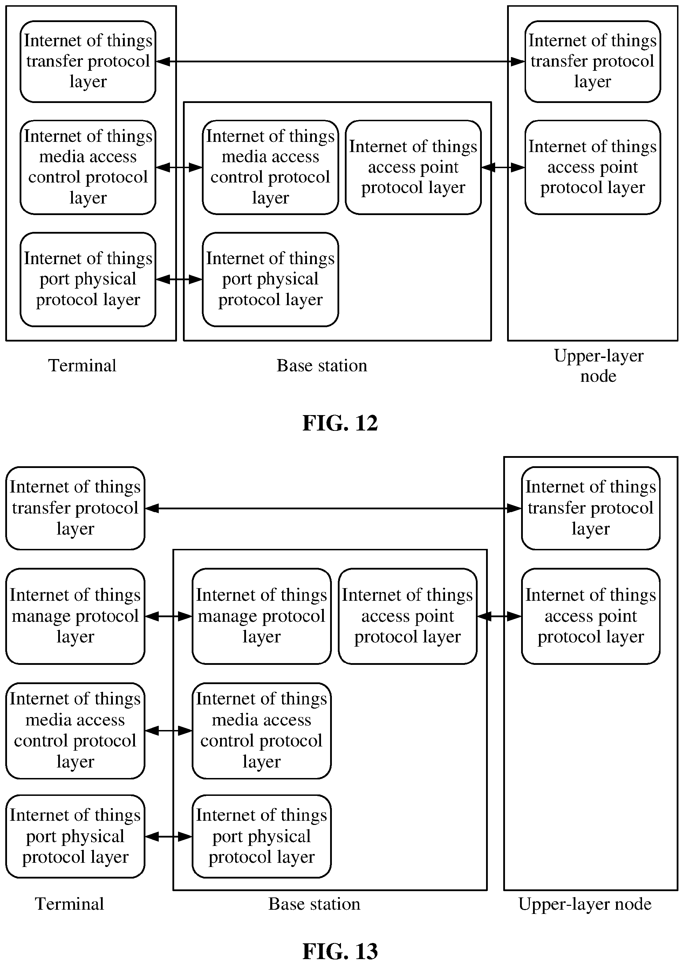

FIG. 12 is a schematic diagram of a first communication architecture of a cellular Internet of things according to an embodiment. As shown in FIG. 12, the base station forwards a data packet sent by the upper-layer node to the terminal.

In FIG. 12, some protocol layers may not exist, for example, an Internet of things transfer protocol layer may not exist. In this case, an Internet of things media access control protocol layer may have more functions.

For the upper-layer node and the base station, the upper-layer node and the base station perform transmission with each other through an interface (that is, a second communication interface) between the upper-layer node and the base station, and a protocol layer of the interface includes an Internet of things access point protocol layer.

A function of the Internet of things access point protocol layer includes one of generating, according to an interface rule, a data packet between the base station and the upper-layer node; sending a data packet to a peer end; or receiving and parsing a data packet at a peer end.

For the base station and the terminal, the base station and the terminal perform transmission with each other through an interface between the base station and the terminal, and a protocol layer of the interface includes an Internet of things port physical protocol layer and an Internet of things media access control protocol layer.

A function of the Internet of things port physical protocol layer includes one of sending a signal or receiving a signal.

A function of the Internet of things media access control protocol layer includes one of the functions below.

A data packet is generated or decoded. A data packet is scheduled or transmitted.

Multiple data packets are concatenated.

A state is maintained. The state includes a state of a transmission process and a state of the terminal.

Encryption/decryption or integrity protection is performed.

For the upper-layer node and the terminal, the upper-layer node and the terminal decode a data packet from a peer end. A protocol layer includes an Internet of things transfer protocol layer.

A function of the Internet of things transfer protocol layer includes the encryption/decryption or the integrity protection.

The encryption/decryption refers to generating or decoding the data packet using an encryption/decryption key or algorithm negotiated by the upper-layer node and the terminal.

The integrity protection refers to generating or decoding the data packet using an integrity protection algorithm negotiated by the upper-layer node and the terminal.

For a downlink data packet, at a side of the upper-layer node, the upper-layer node performs the encryption and the integrity protection on the data packet through the Internet of things transfer protocol layer and sends the downlink data packet to the base station. At a side of the base station, packetization is performed through the Internet of things media access control protocol layer and transmission is performed through the Internet of things port physical protocol layer. At a side of the terminal, the data packet is received through the Internet of things port physical protocol layer, decoded through the Internet of things media access control protocol layer, and decrypted through the Internet of things transfer protocol layer.

Embodiment two: In a scenario without a relay, a communication architecture of a cellular Internet of Things includes an upper-layer node, a base station, and a terminal.

FIG. 13 is a schematic diagram of a second communication architecture of a cellular Internet of things according to an embodiment. As shown in FIG. 13, the upper-layer node generates control information, and the base station forwards a data packet carrying the control information to the terminal. In FIG. 13, some protocol layers may not exist, for example, neither an Internet of things transfer protocol layer nor an Internet of things manage protocol layer may exist. In this case, an Internet of things media access control protocol layer may have more functions.

For the base station and the terminal, the base station and the terminal perform transmission with each other through an interface (that is, a first communication interface) between the base station and the terminal, and a protocol layer of the interface may include an Internet of things port physical protocol layer, an Internet of things media access control protocol layer, and an Internet of things manage protocol layer. A function of the Internet of things manage protocol layer includes one of the functions below.

A state is maintained. The state includes a state of a transmission process and a state of the terminal.

Encryption/decryption is performed.

Integrity protection is performed.

A configuration is stored.

A message is filled in or generated.

For a downlink data packet, at a side of the upper-layer node, the upper-layer node performs the encryption and the integrity protection on the data packet through an Internet of things transfer protocol layer and sends the downlink data packet to the base station. At a side of the base station, the encryption and the integrity protection are performed and the message is filled in and generated through the Internet of things manage protocol layer, packetization is performed through the Internet of things media access control protocol layer, and transmission is performed through the Internet of things port physical protocol layer. At a side of the terminal, a data packet is received through the Internet of things port physical protocol layer, decoded through the Internet of things media access control protocol layer, and decrypted through an IoT higher layer.

Embodiment three: In a scenario with a relay, a communication architecture of a cellular Internet of Things includes an upper-layer node, a base station, the relay, and a terminal.

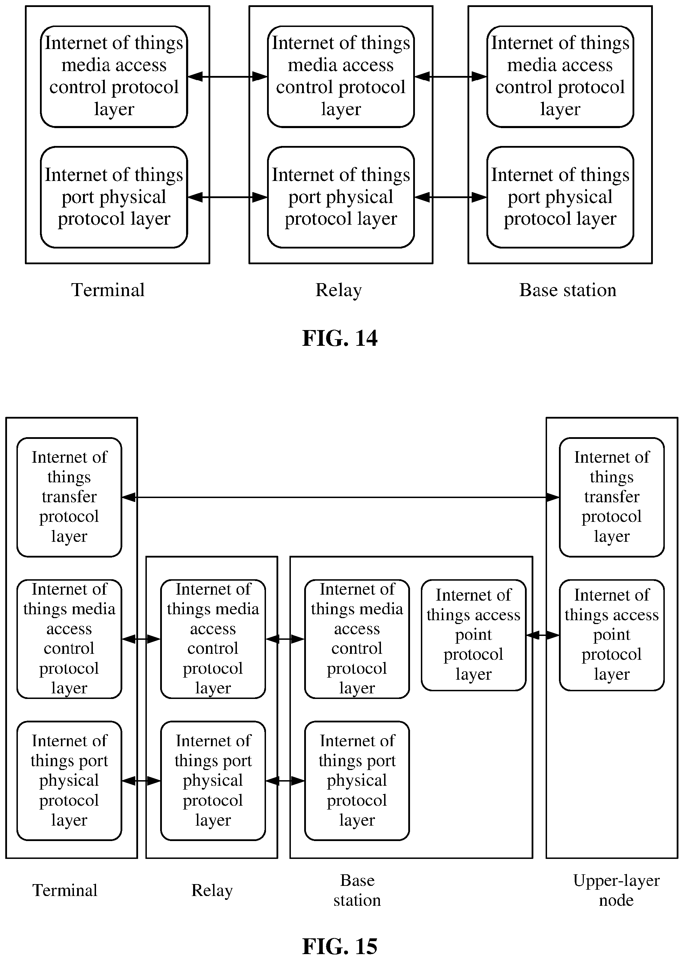

FIG. 14 is a schematic diagram of a third communication architecture of the Internet of things according to an embodiment. As shown in FIG. 14, the relay forwards a data packet sent by the base station to the terminal.

For a downlink data packet, at a side of the base station, the base station processes the data packet and sends the data packet to the relay through an Internet of things media access control protocol layer and an Internet of things port physical protocol layer. At a side of the relay, the data packet is received and forwarded to the terminal through an Internet of things media access control protocol layer and an Internet of things port physical protocol layer. At a side of the terminal, the data packet is received through an Internet of things port physical protocol layer and decoded through an Internet of things media access control protocol layer.

FIG. 15 is a schematic diagram of a fourth communication architecture of the Internet of things according to an embodiment. As shown in FIG. 15, for downlink data, an upper-layer node triggers a procedure, performs encryption and integrity protection on a message through an Internet of things transfer protocol layer, and sends the message to a base station through an Internet of things access point protocol layer. At a side of a terminal, a data packet is received through an Internet of things port physical protocol layer, decoded through an Internet of things media access control protocol layer, and decrypted through an Internet of things transfer protocol layer.

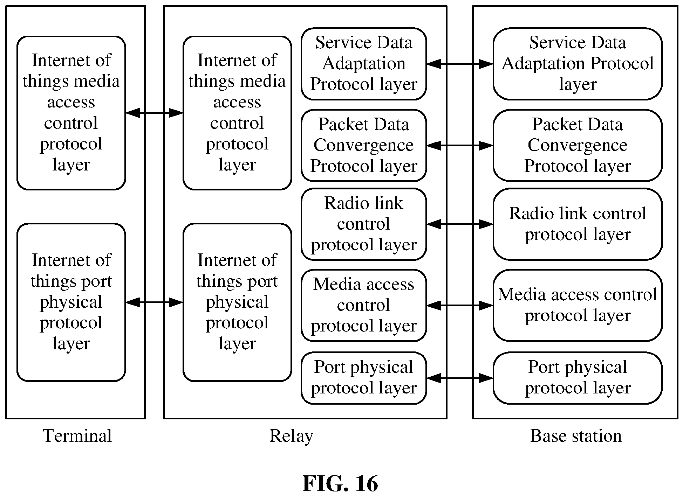

FIG. 16 is a schematic diagram of a fifth communication architecture of the Internet of things according to an embodiment. As shown in FIG. 16, if a relay has an Internet of things protocol layer and a user plane/control plane protocol stack, a base station sends data to the relay through a user plane, and the relay forwards a data packet sent by the base station to a terminal.

For a downlink data packet, at a side of the base station, the base station may process the data packet and send the data packet to the relay through an SDAP layer, a PDCP layer, an RLC protocol layer, a MAC protocol layer, and a PHY protocol layer. At a side of the relay, the data packet is received and converted into a data packet identifiable by the terminal through SDAP, PDCP, RLC, MAC, and PHY, packetization is performed through an Internet of things media access control protocol layer, and transmission is performed through an Internet of things port physical protocol layer. At a side of the terminal, a data packet is received through an Internet of things port physical protocol layer and decoded through an Internet of things media access control protocol layer.

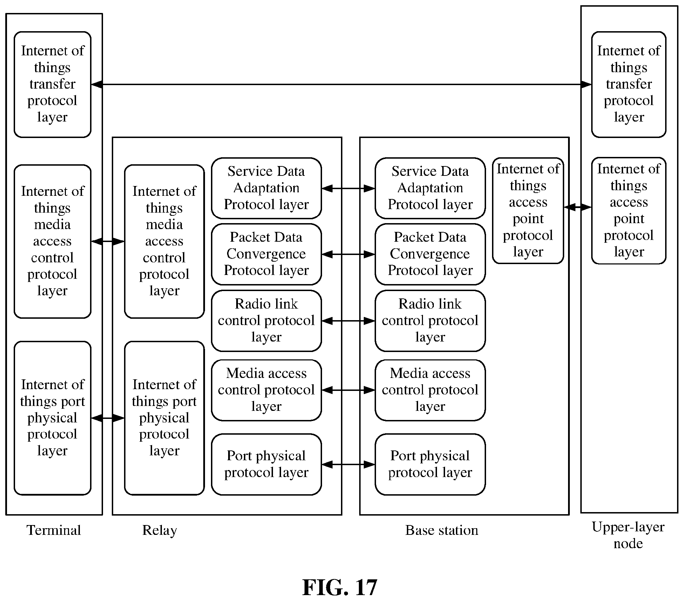

FIG. 17 is a schematic diagram of a sixth communication architecture of the Internet of things according to an embodiment. As shown in FIG. 17, for transmission of downlink data, an upper-layer node triggers a procedure, performs encryption and integrity protection on a message through an Internet of things transfer protocol layer, and sends the message to a base station through an Internet of things access point protocol layer. At a side of a terminal, a data packet is received through an Internet of things port physical protocol layer, decoded through an Internet of things media access control protocol layer, and decrypted through an Internet of things transfer protocol layer.

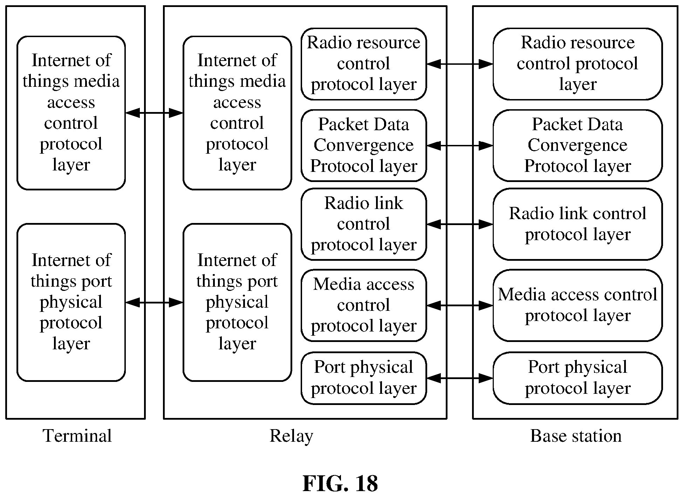

FIG. 18 is a schematic diagram of a seventh communication architecture of the Internet of things according to an embodiment. As shown in FIG. 18, if a relay has a protocol layer of the an Internet of things and a user plane/control plane protocol stack, a base station sends data to the relay through a control plane, and the relay forwards a data packet sent by the base station to a terminal.

For a downlink data transmission process, at a side of the base station, the data packet is processed and sent to the relay through an RRC protocol layer, PDCP, RLC, MAC, and PHY. At a side of the relay, the data packet is received and converted into a data packet identifiable by the terminal through RRC, PDCP, RLC, MAC, and PHY, packetization is performed through an Internet of things media access control protocol layer, and transmission is performed through a port physical protocol layer. At a side of the terminal, a data packet is received through a port physical protocol layer and decoded through an Internet of things media access control protocol layer.

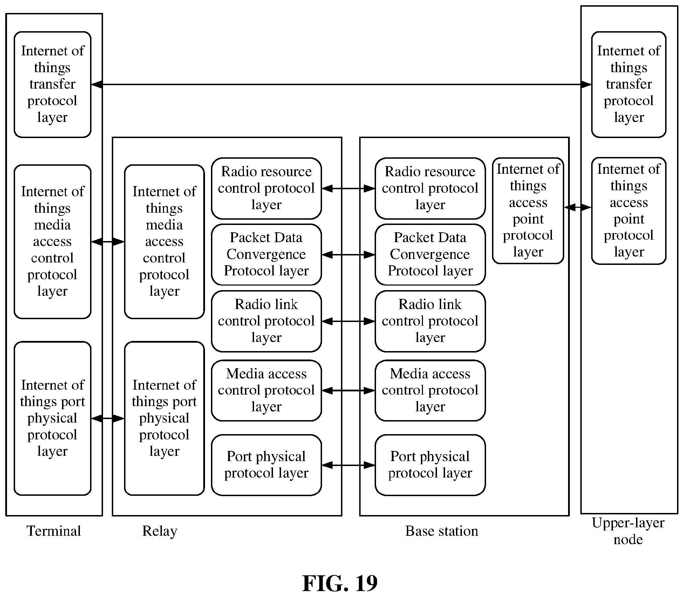

FIG. 19 is a schematic diagram of an eighth communication architecture of the Internet of things according to an embodiment. As shown in FIG. 19, for a downlink data transmission process, an upper-layer node triggers a procedure, performs encryption and integrity protection on a message through an Internet of things transfer protocol layer, and sends the message to a base station through an Internet of things access point protocol layer. At a side of a terminal, a data packet is received through an Internet of things port physical protocol layer, decoded through an Internet of things media access control protocol layer, and decrypted through an Internet of things transfer protocol layer.

Embodiment four: A base station establishes a connection with an upper-layer node (for example, a server or a core network), and the node commands the base station to operate on a terminal under the base station. A communication process between the node and the base station is performed through a control plane of the connection between the node and the base station.

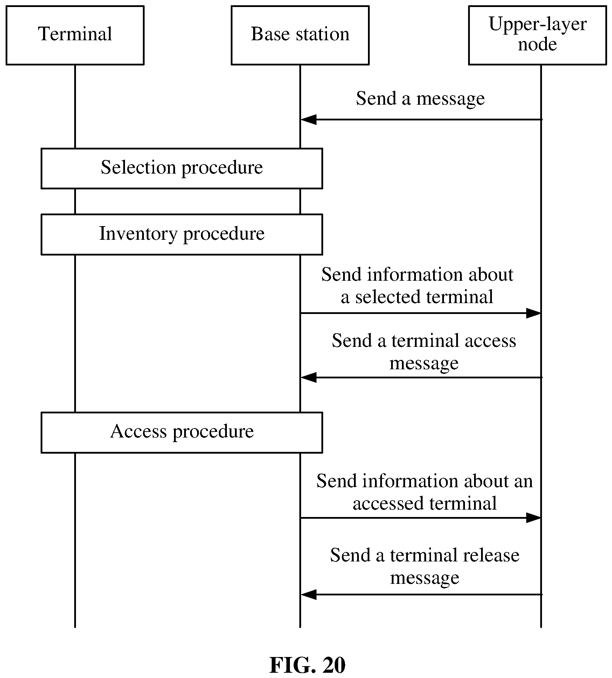

FIG. 20 is a first flowchart of data exchanges between communication nodes in the Internet of things according to an embodiment. As shown in FIG. 20, an exchange process is described below.

In step 1, the upper-layer node triggers the base station to establish a connection with the terminal, and the upper-layer node sends a message to the base station, where the message may be a paging message or another message. The message needs to carry at least one of an indication of a special terminal; an identifier of the terminal or part of an identifier of the terminal; a range within which the message is sent; a data packet; or a message type.

The indication of the special terminal indicates that the message is for the special terminal (for example, a tag).

The identifier of the terminal or part of the identifier of the terminal includes, for example, a personal computer (PC), an electronic product code (EPC), and 16-bit cyclic redundancy check (CRC-16), or part of the PC, EPC, and CRC-16.

The range within which the message is sent refers to which regions, for example, which cells, the message needs to be transmitted in.

The data packet may carry the identifier of the terminal, an encryption key, encryption and decryption algorithms, an integrity protection algorithm, and an agreement between a network and the terminal, for example, a format of a feedback message.

The message type refers to a type of a message carried in the data packet.

In step 2, after receiving the message sent by the upper-layer node, the base station initiates a selection procedure to the terminal and sends a data packet to the terminal according to information provided by the upper-layer node.

After receiving the data packet, the terminal decodes the data packet. If the terminal meets a condition indicated in the message sent by the base station, the terminal considers that it is selected and responds and feeds back a message according to the agreement between the network and the terminal.

In step 3, the base station initiates an inventory procedure to the terminal to require the terminal to feed back the identifier of the terminal and a capability of the terminal according to a certain sequence. After reception, the terminal performs feedback.

In step 4, after receiving the feedback of the terminal, the base station sends information about the selected terminal to the upper-layer node, where a message may include initial information about the terminal (that is, INITIAL UE MESSAGE), an UPLINK NAS TRANSPORT message, or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include feedback messages of multiple terminals, for example, the feedback messages of the multiple terminals are concatenated. Each feedback message includes at least one of the identifier of the terminal, feedback content, a size of the feedback message, or whether the feedback succeeds. These feedback messages may be messages on which encryption or integrity protection is performed.

The size of the data packet refers to how many terminals the feedback messages included in the data packet belong to.

In step 5, according to the feedback from the base station, the upper-layer node causes the base station to initiate an access procedure to the terminal. The upper-layer node sends a terminal access message to the base station, where the message may be a DOWNLINK NAS TRANSPORT message or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include access messages for multiple terminals, for example, the access messages for the multiple terminals are concatenated. Each access message includes at least one of the identifier of the terminal, a type of the access message, the content of the access message, a size of the access message, or the format of the access message. These access messages may be messages on which the encryption or the integrity protection is performed.

The size of the data packet refers to how many terminals the access messages included in the data packet belong to.

In step 6, after receiving the terminal access message sent by the upper-layer node, the base station sends a data packet to the terminal.

In step 7, after receiving the feedback of the terminal, the base station determines an accessed terminal and sends information about the accessed terminal to the upper-layer node, where a message may be an UPLINK NAS TRANSPORT message, an NAS DELIVERY INDICATION message, or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include feedback messages of multiple terminals, for example, the feedback messages of the multiple terminals are concatenated. Each feedback message includes at least one of the identifier of the terminal, the feedback content, the size of the feedback message, or whether the feedback succeeds. These feedback messages may be messages on which the encryption or the integrity protection is performed.

The size of the data packet refers to how many terminals the feedback messages included in the data packet belong to.

In step 8, the upper-layer node chooses to release the terminal and sends a terminal release message to the base station, where the message may be a terminal context release command (that is, UE CONTEXT RELEASE COMMAND) or another message, and the message needs to carry at least one of the indication of the special terminal; or the identifier of the terminal or part of the identifier of the terminal.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

Embodiment five: A base station establishes a connection with an upper-layer node (for example, a server or a core network), and the node commands the base station to operate on a terminal under the base station. A communication process between the node and the base station is performed through a control plane of the connection between the node and the base station.

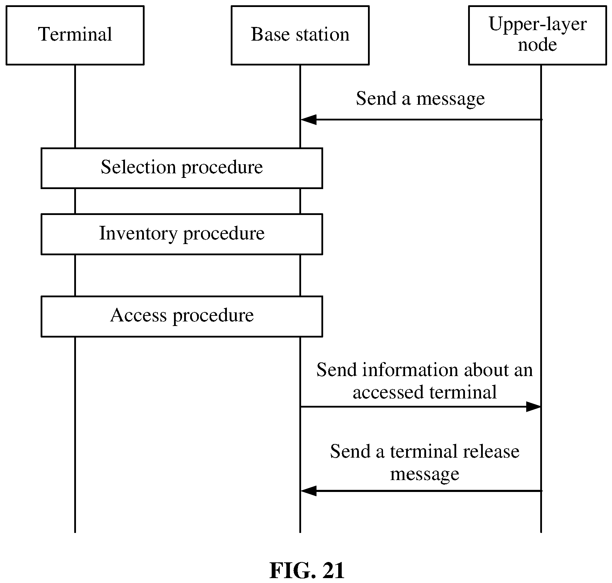

FIG. 21 is a second flowchart of data exchanges between communication nodes in the Internet of things according to an embodiment. As shown in FIG. 21, an exchange process is described below.

In step 1, the upper-layer node triggers the base station to establish a connection with the terminal, and the upper-layer node sends a message to the base station, where the message may be a DOWNLINK NAS TRANSPORT message or another message, and the message needs to carry at least one of an indication of a special terminal; an identifier of the terminal or part of an identifier of the terminal; a range within which the message is sent; an identifier of a group of terminals; a resource for the connection between the upper-layer node and the base station; a data packet; or a size of a data packet.

The indication of the special terminal indicates that the message is for the special terminal (for example, a tag).

The identifier of the terminal or part of the identifier of the terminal includes, for example, a PC, EPC, and CRC-16, or part of the PC, EPC, and CRC-16.

The range within which the message is sent refers to which regions, for example, which cells, the message needs to be transmitted in.

The identifier of the group of terminals is a unified identifier of multiple terminals.

The data packet may include access messages for multiple terminals, for example, the access messages for the multiple terminals are concatenated. Each access message includes at least one of the identifier of the terminal, a type of the access message, the content of the access message, a size of the access message, or a format of a access message. These access messages may be messages on which encryption or integrity protection is performed.

The size of the data packet refers to how many terminals the access messages included in the data packet belong to.

In step 2, after receiving the message sent by the upper-layer node, the base station initiates a selection procedure to the terminal, determines a selected terminal, and identifies the terminal according to information provided by the upper-layer node. The base station initiates an inventory procedure to the terminal to require the terminal to feed back the identifier of the terminal and a capability of the terminal according to a certain sequence. After reception, the terminal performs feedback. According to the information provided by the upper-layer node, the base station initiates an access procedure to the terminal to notify the selected terminal of a to-be-performed operation such as read, write, lock, or inactivation. After reception, the terminal performs the operation and feeds back a message according to an access command.

In step 3, after receiving the feedback of the terminal, the base station determines an accessed terminal and sends information about the accessed terminal to the upper-layer node, where a message may be an UPLINK NAS TRANSPORT message, an NAS DELIVERY INDICATION message, or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include feedback messages of multiple terminals, for example, the feedback messages of the multiple terminals are concatenated. Each feedback message includes at least one of the identifier of the terminal, feedback content, a size of the feedback message, or whether the feedback succeeds. These feedback messages may be messages on which the encryption or the integrity protection is performed.

The size of the data packet refers to how many terminals the feedback messages included in the data packet belong to.

In step 4, the upper-layer node chooses to release the terminal and sends a terminal release message to the base station, where the message may be a terminal context release command (that is, UE CONTEXT RELEASE COMMAND) or another message, and the message needs to carry at least one of the indication of the special terminal; or the identifier of the terminal or part of the identifier of the terminal.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

Embodiment six: A base station establishes a connection with an upper-layer node (for example, a server or a core network), and the base station establishes no connection with a relay. The node commands the base station to operate on a terminal under the base station. A communication process between the node and the base station is performed through a control plane of the connection between the node and the base station. A communication process between the relay and the base station is performed through a control plane of a connection between the relay and the base station.

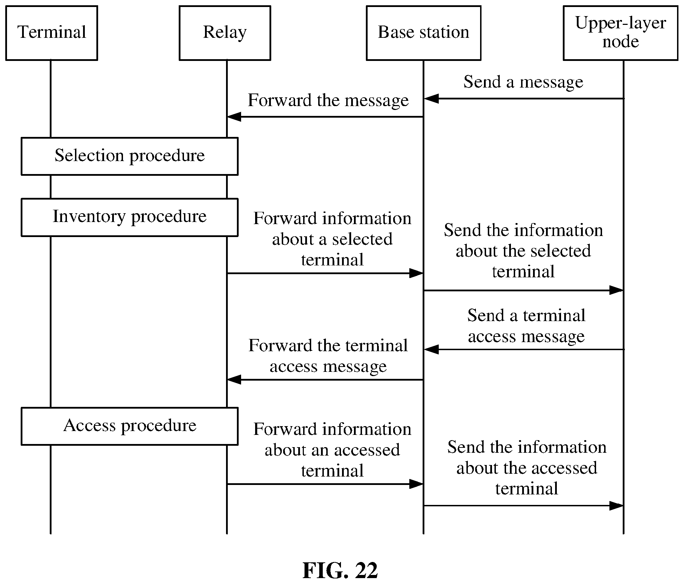

FIG. 22 is a third flowchart of data exchanges between communication nodes in the Internet of things according to an embodiment. As shown in FIG. 22, an exchange process is described below.

In step 1, the upper-layer node triggers the base station to establish a connection with the terminal, and the upper-layer node sends a message to the base station, where the message may be a paging message or another message. The message needs to carry at least one of an indication of a special terminal; an identifier of the terminal or part of an identifier of the terminal; an identifier of the relay; a range within which the message is sent; a data packet; or a message type.

The indication of the special terminal indicates that the message is for the special terminal (for example, a tag).

The identifier of the terminal or part of the identifier of the terminal includes, for example, a PC, EPC, and CRC-16, or part of the PC, EPC, and CRC-16.

The range within which the message is sent refers to which regions, for example, which cells, the message needs to be transmitted in.

The data packet may carry the identifier of the terminal, an encryption key, encryption and decryption algorithms, an integrity protection algorithm, and an agreement between a network and the terminal, for example, a format of a feedback message.

The message type refers to a type of a message carried in the data packet.

In step 2, after receiving the message sent by the upper-layer node, the base station forwards the message sent by the upper-layer node to the relay to wake up the relay. The message may be the paging message or another message. The message needs to carry at least one of the indication of the special terminal; the identifier of the terminal or part of the identifier of the terminal; the identifier of the relay; the data packet; or the message type.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may carry the identifier of the terminal, the encryption key, the encryption and decryption algorithms, the integrity protection algorithm, and the agreement between the network and the terminal, for example, the format of the feedback message.

The message type refers to the type of the message carried in the data packet.

In step 3, after receiving the message, the relay initiates a selection procedure to the terminal and sends a data packet to the terminal according to the received message.

In step 4, the relay initiates an inventory procedure to the terminal to require the terminal to feed back the identifier of the terminal and a capability of the terminal according to a certain sequence. After reception, the terminal performs feedback.

In step 5, after receiving the feedback of the terminal, the relay forwards information about a selected terminal to the base station, where a message may be an RRC Connection Request or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include feedback messages of multiple terminals, for example, the feedback messages of the multiple terminals are concatenated. Each feedback message includes at least one of the identifier of the terminal, feedback content, a size of the feedback message, or whether the feedback succeeds. These feedback messages may be messages on which encryption or integrity protection is performed.

The size of the data packet refers to how many terminals the feedback messages included in the data packet belong to.

In step 6, after receiving the feedback from the relay, the base station sends the information about the selected terminal to the upper-layer node, where a message may include initial information about the terminal (that is, INITIAL UE MESSAGE), an UPLINK NAS TRANSPORT message, or another message, and the message needs to carry at least one of the indication of the special terminal; the identifier of the terminal or part of the identifier of the terminal; the data packet; or the size of the data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include the feedback messages of the multiple terminals, for example, the feedback messages of the multiple terminals are concatenated. Each feedback message includes at least one of the identifier of the terminal, the feedback content, the size of the feedback message, or whether the feedback succeeds. These feedback messages may be the messages on which the encryption or the integrity protection is performed.

The size of the data packet refers to how many terminals the feedback messages included in the data packet belong to.

In step 7, according to the feedback from the base station, the upper-layer node initiates an access procedure to the terminal. The upper-layer node sends a terminal access message to the base station, where the message may include a DOWNLINK NAS TRANSPORT message or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include access messages for multiple terminals, for example, the access messages for the multiple terminals are concatenated. Each access message includes at least one of the identifier of the terminal, a type of the access message, the content of the access message, a size of the access message, or the format of the feedback message. These access messages may be messages on which the encryption or the integrity protection is performed.

The size of the data packet refers to how many terminals the access messages included in the data packet belong to.

In step 8, after receiving the terminal access message sent by the upper-layer node, the base station forwards the data packet to the relay. The message may be an RRC Connection Setup message or another message, and the message needs to carry at least one of the indication of the special terminal; the identifier of the terminal or part of the identifier of the terminal; the data packet; or the size of the data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include the access messages for the multiple terminals, for example, the access messages for the multiple terminals are concatenated. Each access message includes at least one of the identifier of the terminal, the type of the access message, the content of the access message, the size of the access message, or the format of the feedback message. These access messages may be the messages on which the encryption or the integrity protection is performed.

The size of the data packet refers to how many terminals the access messages included in the data packet belong to.

In step 9, after receiving the data packet sent by the base station, the relay decodes the data packet, initiates the access procedure to the terminal, and sends the data packet to the terminal through the access procedure. In the access procedure, the relay notifies the selected terminal of a to-be-performed operation such as read, write, lock, or inactivation. After reception, the terminal performs the operation and feeds back a message according to an access command.

In step 10, after receiving the feedback of the terminal, the relay sends information about an accessed terminal to the base station, where a message may be an RRC Connection Setup Complete message or another message, and the message needs to carry at least one of the indication of the special terminal; the identifier of the terminal or part of the identifier of the terminal; a data packet; or a size of a data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include feedback messages of multiple terminals, for example, the feedback messages of the multiple terminals are concatenated. Each feedback message includes at least one of the identifier of the terminal, the feedback content, the size of the feedback message, or whether the feedback succeeds. These feedback messages may be messages on which the encryption or the integrity protection is performed.

The size of the data packet refers to how many terminals the feedback messages included in the data packet belong to.

In step 11, after receiving the feedback from the relay, the base station sends the information about the accessed terminal to the upper-layer node, where a message may be an UPLINK NAS TRANSPORT message, an NAS DELIVERY INDICATION message, or another message, and the message needs to carry at least one of the indication of the special terminal; the identifier of the terminal or part of the identifier of the terminal; the data packet; or the size of the data packet.

The indication of the special terminal indicates that the message is for the special terminal (for example, the tag).

The identifier of the terminal or part of the identifier of the terminal includes, for example, the PC, EPC, and CRC-16, or part of the PC, EPC, and CRC-16.

The data packet may include the feedback messages of the multiple terminals, for example, the feedback messages of the multiple terminals are concatenated. Each feedback message includes at least one of the identifier of the terminal, the feedback content, the size of the feedback message, or whether the feedback succeeds. These feedback messages may be the messages on which the encryption or the integrity protection is performed.

The size of the data packet refers to how many terminals the feedback messages included in the data packet belong to.

An embodiment of the present application provides a storage medium. The storage medium stores a computer program which, when executed by a processor, causes the processor to perform the data transmission method according to any embodiment of the present application.

Optionally, the transmission method is applied to a terminal device and includes determining to-be-transmitted information, where the to-be-transmitted information instructs a management entity to perform resource selection for the terminal device; and transmitting the to-be-transmitted information to the management entity.

Optionally, the transmission method is applied to a management entity and includes acquiring to-be-transmitted information, where the to-be-transmitted information instructs the management entity to perform resource selection for a terminal device; and performing the resource selection based on the to-be-transmitted information.

A computer storage medium in embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples (a non-exhaustive list) of the computer-readable storage medium include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM, or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A first communication node, comprising:
a first communication interface, wherein the first communication node is connected to a second communication node through the first communication interface;
wherein data transmitted between the first communication node and the second communication node through a protocol layer of a first Internet of things is data processed by a target communication node using a target processing method, the target communication node comprises the first communication node and a third communication node, the target processing method is a method for processing data by the first communication node and the third communication node, and the protocol layer of first Internet of things is a protocol layer comprised in the first communication node in an Internet of things; and
wherein the first communication node is a passive communication node.

2. The first communication node of claim 1, wherein the protocol layer of first Internet of things of the first communication interface comprises:
a first protocol layer of the first Internet of things configured to transmit data exchanged between the first communication node and the second communication node; and
a second protocol layer of the first Internet of things configured to perform at least one of the following: generating a data packet, decoding a data packet, scheduling a data packet, transmitting a data packet, concatenating a plurality of data packets, extracting a data packet, maintaining a state, encryption, decryption, or integrity protection.

3. The method of claim 2, wherein the data packet of the second protocol layer of the first Internet of things comprises a first header and first data, wherein the first header comprises at least one of:
a first data type indicating a type of a data packet comprised in the first data;
a length of a data packet comprised in the first data;
processing indication information indicating processing performed on a data packet comprised in the first data;
a target identifier indicating an identifier of a communication node that receives a data packet comprised in the first data; or
a source side identifier indicating an identifier of a communication node that sends a data packet comprised in the first data.

4. The first communication node of claim 1, wherein the protocol layer of the first Internet of things comprises a third protocol layer of the first Internet of things configured to perform at least one of the following:
maintaining a state, encryption, decryption, integrity protection, storing a configuration, filling in a message, generating a message, or executing a control procedure.

5. The first communication node of claim 1, wherein the protocol layer of the first Internet of things comprises a fourth protocol layer of the first Internet of things configured to process data using at least one of the following target processing methods:
encryption, decryption, or integrity protection.

6. A second communication node, comprising:
a first communication interface and a second communication interface, wherein the second communication node is connected to the first communication node of any one of claims 1 to 5 through the first communication interface, the second communication node is connected to a third communication node through the second communication interface, and the second communication node forwards data exchanged between the first communication node and the third communication node;
wherein data transmitted between the second communication node and the first communication node through a first set protocol layer is data processed by a target communication node using a target processing method, the target communication node comprises the first communication node and the third communication node, and the target processing method is a method for processing data by the first communication node and the third communication node; and
wherein the second communication node communicates with the third communication node through a second set protocol layer.

7. The second communication node of claim 6, wherein the first set protocol layer of the first communication interface comprises:
a first protocol layer of a second Internet of things configured to transmit data exchanged between the first communication node and the second communication node; and
a second protocol layer of the second Internet of things configured to perform at least one of the following: generating a data packet, decoding a data packet, scheduling a data packet, transmitting a data packet, concatenating a plurality of data packets, or maintaining a state.

8. The second communication node of claim 6, wherein the first set protocol layer further comprises a third protocol layer of the second Internet of things configured to perform at least one of the following:
maintaining a state, storing a configuration, filling in a message, or generating a message.

9. The second communication node of claim 6, wherein the second set protocol layer comprises a fourth protocol layer of the second Internet of things configured to perform at least one of the following:
generating, based on an interface rule between the second communication node and the third communication node, data between the second communication node and the third communication node;
transmitting data exchanged between the third communication node and the second communication node; or
parsing data transmitted from the third communication node.

10. The second communication node of claim 6, wherein the first set protocol layer comprises a first user plane protocol stack.

11. The second communication node of claim 6, wherein the first set protocol layer comprises a first control plane protocol stack.

12. The second communication node of claim 6, wherein a message of a control plane received from the third communication node comprises first control information and a first data packet, the first data packet comprises a command of the third communication node, and the first control information comprises one or more of:
a first message type indicating a type of the first data packet;
an identifier of the first communication node;
a connection identifier indicating an identifier of a connection between the second communication node and the third communication node;
first indication information indicating processing performed on the first data packet; or
a length of the first data packet.

13. The second communication node of claim 6, wherein a message sent to the third communication node through a control plane comprises second control information and a second data packet, the second data packet comprises feedback of the first communication node, and the second control information comprises one or more of:
a second message type indicating a type of the second data packet;
an identifier of the first communication node;
a connection identifier indicating an identifier of a connection between the second communication node and the third communication node;
second indication information indicating processing performed on the second data packet; or
a length of the second data packet.

14. The second communication node of claim 6, wherein a data packet of a user plane received from the third communication node comprises a second header and a third data packet, the third data packet comprises a command of the third communication node, and the second header comprises one or more of:
a second data type indicating a type of the third data packet;
an identifier of the first communication node;
third indication information indicating processing performed on the third data packet; or
a length of the third data packet.

15. The second communication node of claim 6, wherein a data packet transmitted to the third communication node through a user plane comprises a third header and a fourth data packet, the fourth data packet comprises feedback of the first communication node, and the third header comprises one or more of:
a third data type indicating a type of the fourth data packet;
an identifier of the first communication node;
fourth indication information indicating processing performed on the fourth data packet; or
a length of the fourth data packet.

16. The second communication node of claim 6, wherein a message received from the third communication node comprises one or more of:
type information of the first communication node;
an identifier of the first communication node;
partial information of an identifier of the first communication node;
a range within which the message is sent;
a message type;
a data packet;
a size of a data packet; or
an identifier of a fourth communication node.

17. The second communication node of claim 6, wherein a message sent to the third communication node comprises at least one of:
type information of the first communication node;
an identifier of the first communication node;
partial information of an identifier of the first communication node;
a size of a data packet; or
a data packet comprising feedback of the first communication node.

18. The second communication node of claim 6, wherein a message received from the third communication node comprises at least one of:
type information of the first communication node;
an identifier of the first communication node;
partial data of an identifier of the first communication node;
a range within which the message is sent;
an identifier of a group of first communication nodes;
a resource for a connection between the second communication node and the third communication node;
a data packet comprising feedback of the first communication node; or
a size of a data packet.

19. A third communication node, comprising:
a second communication interface, wherein the third communication node is connected to the second communication node of any one of claims 6 to 18 through the second communication interface, data transmitted between the third communication node and the second communication node through a protocol layer of a third Internet of things is data processed by a target communication node using a target processing method, the target communication node comprises a first communication node and the third communication node, and the target processing method is a method for processing data by the first communication node and the third communication node.

20. The third communication node of claim 19, wherein the protocol layer of the third Internet of things of the second communication interface comprises a first protocol layer of the third Internet of things configured to perform at least one of the following:
generating, based on an interface rule between the second communication node and the third communication node, data between the second communication node and the third communication node;
transmitting data exchanged between the third communication node and the second communication node; or
parsing data transmitted from the second communication node.

21. The third communication node of claim 19, wherein the protocol layer of the third Internet of things of the second communication interface comprises a second protocol layer of the third Internet of things configured to perform at least one of:
encryption, decryption, or integrity protection.

22. The third communication node of claim 19, wherein the third communication node comprises a first network element, a second network element, and a third network element, and data transmission is performed between the first communication node and the third communication node through the first network element, the second network element, and the third network element.

23. The third communication node of claim 22, wherein a message sent by the first network element to the second network element comprises one or more of:
an identifier of a server;
connection information;
information about the first communication node; or
command information.

24. The third communication node of claim 23, wherein a message sent by the second network element to the first network element comprises one or more of:
the information about the first communication node;
the command information;
a capability of the first communication node;
a state of the first communication node; or
subscription information of the first communication node.

25. A fourth communication node, comprising:
a third communication interface and a fourth communication interface, wherein the fourth communication node is connected to the first communication node of any one of claims 1 to 6 through the third communication interface, the fourth communication node is connected to a second communication node through the fourth communication interface, the fourth communication node forwards, through a third set protocol layer, data transmitted between the second communication node and the first communication node, the data transmitted between the second communication node and the first communication node is data processed by a target communication node using a target processing method, the target communication node comprises the first communication node and a third communication node, and the target processing method is a method for processing data by the first communication node and the third communication node.

26. The fourth communication node of claim 25, wherein the third set protocol layer comprises a protocol layer of a fourth Internet of things, and the protocol layer of the fourth Internet of things comprises:
a first protocol layer of the fourth Internet of things configured to transmit data exchanged between the first communication node and the second communication node; and
a second protocol layer of the fourth Internet of things configured to perform at least one of the following:
generating a data packet, decoding a data packet, scheduling a data packet, transmitting a data packet, concatenating a plurality of data packets, or maintaining a state.

27. The fourth communication node of claim 25, wherein the third set protocol layer comprises a second user plane protocol stack or a second control plane protocol stack.

28. A data transmission method, applied to the first communication node of any one of claims 1 to 5, comprising:
communicating with the second communication node through the protocol layer of the first Internet of things.

29. A data transmission method, applied to the second communication node of any one of claims 6 to 18, comprising:
communicating with the first communication node through the first set protocol layer; and
communicating with the third communication node through the second set protocol layer.

30. A data transmission method, applied to the third communication node of any one of claims 19 to 24, comprising:
communicating with the second communication node through the protocol layer of the third Internet of things.

31. A data transmission method, applied to the fourth communication node of any one of claims 25 to 27, comprising:
communicating with the first communication node and the second communication node through the third set protocol layer.

32. A storage medium storing a computer program which, when executed by a processor, causes the processor to perform the method of any one of claims 28 to 31.
